# EUROPEAN PATENT SPECIFICATION

(11) **EP 4 581 419 B1**
(45) Date of publication and mention of the grant of the patent: **02.09.2026**
(21) Application number: 23798285.5
(22) Date of filing: 19.10.2023
(51) Int. Cl.: G02B 9/64, G02B 13/04, G02B 13/18

(54) **IMAGE-FORMING LENS, INTERCHANGEABLE LENS, IMAGE-CAPTURING APPARATUS, AND INFORMATION PROCESSING APPARATUS**
BILDERZEUGUNGSLINSE, WECHSELOBJEKTIV, BILDAUFNAHMEVORRICHTUNG UND INFORMATIONSVERARBEITUNGSVORRICHTUNG
LENTILLE DE FORMATION D'IMAGE, LENTILLE INTERCHANGEABLE, APPAREIL DE CAPTURE D'IMAGE ET APPAREIL DE TRAITEMENT D'INFORMATIONS

(30) Priority: 04.11.2022 JP 2022177253
(43) Date of publication of application: 09.07.2025
(73) Proprietor: Ricoh Company, Ltd., Tokyo 143-8555 (JP)
(72) Inventor: NAKAYAMA, Takahiro, Tokyo 143-8555 (JP)
(74) Representative: J A Kemp LLP
(86) International application number: PCT/IB2023/060548
(87) International publication number: WO 2024/095091

(56) References cited:
- US-A1- 2013 057 972
- US-A1- 2013 321 936

## Description

### [Technical Field]

Embodiments of the present disclosure relate to an image-forming lens, an interchangeable lens, an image-capturing apparatus, and an information processing apparatus.

### [Background Art]

Patent Literature (PTL) 1 describes an image-forming optical system that includes, sequentially from the object side, a first lens group having positive refractive power, an aperture stop, a second lens group having positive refractive power, and a third lens group having negative refractive power.

PTL 2 describes an image-capturing optical system that includes a front lens group on the object side relative to the aperture stop and a rear lens group on the image side relative to the aperture stop. The image-capturing optical system features a lens system as a whole with an F-number of 2.2 or less.

PTL 3 describes an image-forming optical system that consists of, in order from the object side toward the image side, a first lens group having negative refractive power, a second lens group having positive refractive power, an aperture stop, a third lens group having positive refractive power, and a fourth lens group.

PTL 4 describes an image-capturing lens that includes substantially six lenses: a negative first lens, a negative second lens, a positive third lens, a positive fourth lens, a negative fifth lens, and a positive sixth lens, which are sequentially arranged from the object side.

US 2013/321936 concerns an imaging lens, a camera, and a portable information terminal device designed to achieve a compact, high-performance optical system with a wide angle of view and a large aperture. The lens consists of a front lens group with positive refractive power, an aperture stop, and a rear lens group with positive refractive power. To effectively correct aberrations such as coma and distortion without requiring extensive image processing, the design utilizes exactly three air lenses situated between the outermost lens elements. These include biconvex air lenses on the object and image sides and a biconcave intermediate air lens that contains the aperture stop.

### [Citation List]

### [Patent Literature]

[PTL 1]
   Japanese Unexamined Patent Application Publication No. 2022-67328
[PTL 2]
   Japanese Unexamined Patent Application Publication No. 2021-43376
[PTL 3]
   Japanese Patent No. 5895718
[PTL 4]
   Japanese Patent No. 5847829

### [Summary of Invention]

### [Technical Problem]

However, through diligent research, the inventor has identified challenges in PTLs 1 to 4, particularly regarding reduction in size and increase in angle of view.

Embodiments of the present disclosure are completed based on the above-described awareness of advantages, and an object of the disclosure is to provide an image-forming lens, an interchangeable lens, an image-capturing apparatus, and an information processing apparatus, which achieve a reduction in size and an increase in angle of view.

### [Solution to Problem]

An embodiment of the present disclosure provides an image-forming lens consisting of, sequentially from an object side toward an image side: a first lens group having negative refractive power; a second lens group having positive refractive power; an aperture stop; a third lens group having positive refractive power; and a fourth lens group. The fourth lens group has weakest refractive power among all of the first lens group, the second lens group, the third lens group, and the fourth lens group. The first lens group consists of a negative lens with a concave surface facing an image. The second lens group consists of, sequentially from the object side toward the image side: a negative lens with a concave surface facing an object; and a cemented lens having positive refractive power as a whole. The third lens group consists of: a biconvex positive lens closest to the object in the third lens group; and a negative lens closest to the image in the third lens group, the negative lens with a concave surface facing the object. The fourth lens group consists of a single lens or a cemented lens. In the fourth lens group, a surface closest to the object is a concave surface facing the object, and a surface closest to the image is a convex surface facing the image. An air lens is disposed between a surface closest to the image in the second lens group and a surface closest to the object in the third lens group. The air lens includes the aperture stop and has a meniscus shape with a convex surface facing the object.

An embodiment of the present disclosure provides an image-forming lens consisting of, sequentially from an object side toward an image side: a first lens group having negative refractive power; a second lens group having positive refractive power; an aperture stop; a third lens group having positive refractive power; and a fourth lens group. The fourth lens group has weakest refractive power among all of the first lens group, the second lens group, the third lens group, and the fourth lens group. The first lens group consists of a negative lens with a concave surface facing an image. The second lens group consists of, sequentially from the object side toward the image side: a negative lens with a concave surface facing an object; and a cemented lens having positive refractive power as a whole. The third lens group includes: a cemented lens of a negative lens closest to the image and a positive lens that is second closest to the image in the third lens group; and a positive lens on the object side relative to the cemented lens of the third lens group. The fourth lens group consists of a single lens or a cemented lens. In the fourth lens group, a surface closest to the object is a concave surface facing the object, and a surface closest to the image is a convex surface facing the image. An air lens is disposed between a surface closest to the image in the second lens group and a surface closest to the object in the third lens group. The air lens includes the aperture stop and has a meniscus shape with a convex surface facing the object.

An embodiment of the present disclosure provides an image-forming lens consisting of, sequentially from an object side toward an image side: a first lens group having negative refractive power; a second lens group having positive refractive power; an aperture stop; a third lens group having positive refractive power; and a fourth lens group. The fourth lens group has weakest refractive power among all of the first lens group, the second lens group, the third lens group, and the fourth lens group. The first lens group consists of a negative lens with a concave surface facing an image. The second lens group consists of, sequentially from the object side toward the image side: a negative lens with a concave surface facing an object; and a cemented lens having positive refractive power as a whole. The third lens group consists of: a cemented lens of a negative lens closest to the image and a positive lens that is second closest to the image in the third lens group; and three or fewer elements. The fourth lens group consists of a single lens or a cemented lens, in the fourth lens group: a surface closest to the object is a concave surface facing the object, and a surface closest to the image is a convex surface facing the image. An air lens is disposed between a surface closest to the image in the second lens group and a surface closest to the object in the third lens group. The air lens includes the aperture stop and has a meniscus shape with a convex surface facing the object.

An embodiment of the present disclosure provides an image-forming lens consisting of, sequentially from an object side toward an image side: a first lens group having negative refractive power; a second lens group having positive refractive power; an aperture stop; a third lens group having positive refractive power; and a fourth lens group. The fourth lens group has weakest refractive power among all of the first lens group, the second lens group, the third lens group, and the fourth lens group. The first lens group consists of a negative lens with a concave surface facing an image. The second lens group consists of, sequentially from the object side toward the image side: a negative meniscus lens with a concave surface facing an object; and a positive lens or a cemented lens having positive refractive power as a whole. The third lens group consists of: a cemented lens of a negative lens closest to the image and a positive lens that is second closest to the image in the third lens group; and three or fewer elements. The fourth lens group consists of a single lens or a cemented lens. In the fourth lens group, a surface closest to the object is a concave surface facing the object, and a surface closest to the image is a convex surface facing the image. An air lens is disposed between a surface closest to the image in the second lens group and a surface closest to the object in the third lens group. The air lens includes the aperture stop and has a meniscus shape with a convex surface facing the object.

An embodiment of the present disclosure provides an image-forming lens consisting of, sequentially from an object side toward an image side: a first lens group having negative refractive power; a second lens group having positive refractive power; an aperture stop; a third lens group having positive refractive power; and a fourth lens group. The fourth lens group has weakest refractive power among all of the first lens group, the second lens group, the third lens group, and the fourth lens group. The first lens group consists of a negative lens with a concave surface facing an image. The second lens group consists of, sequentially from the object side toward the image side: a negative lens with a concave surface facing an object; and a cemented lens of, sequentially from the object side, a positive lens and a negative lens, the cemented lens having positive refractive power as a whole. The third lens group consists of: a positive lens closest to the object in the third lens group; and a negative lens with a concave surface facing the object, on the image side relative to the positive lens closest to the object in the third lens group. The fourth lens group consists of a single lens or a cemented lens. In the fourth lens group, a surface closest to the object is a concave surface facing the object, and a surface closest to the image is a convex surface facing the image. An air lens is disposed between a surface closest to the image in the second lens group and a surface closest to the object in the third lens group. The air lens includes the aperture stop and has a meniscus shape with a convex surface facing the object.

### [Advantageous Effects of Invention]

According to one aspect of the present disclosure, an image-forming lens, an interchangeable lens, an image-capturing apparatus, and an information processing apparatus reduce the size and increase the angle of view.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.
[FIG. 1]

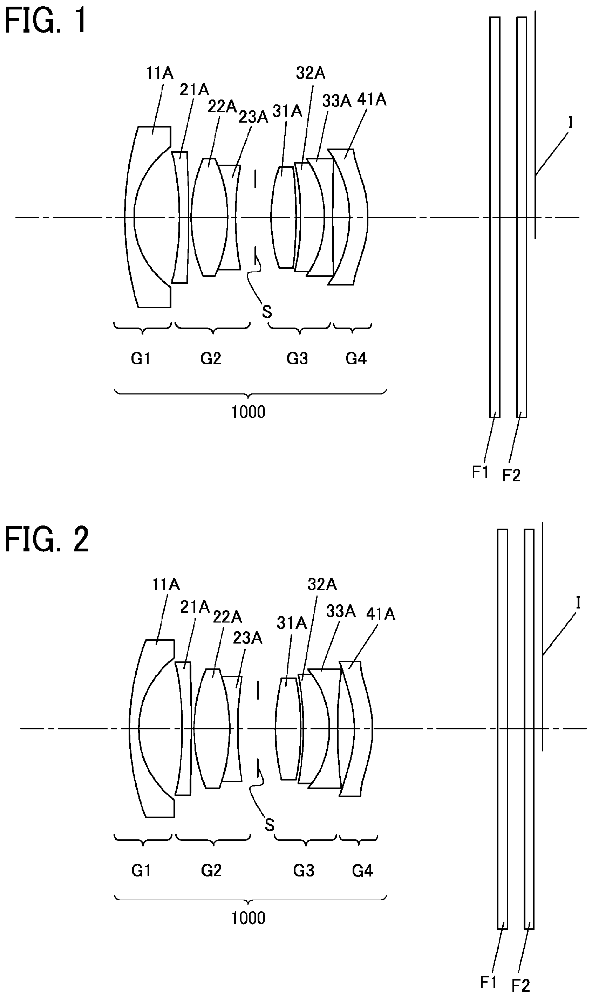

   FIG. 1 is a cross-sectional view of an image-forming lens according to Numerical Example 1 of the present disclosure.
[FIG. 2]
   FIG. 2 is a cross-sectional view of an image-forming lens according to Numerical Example 2 of the present disclosure.
[FIG. 3]

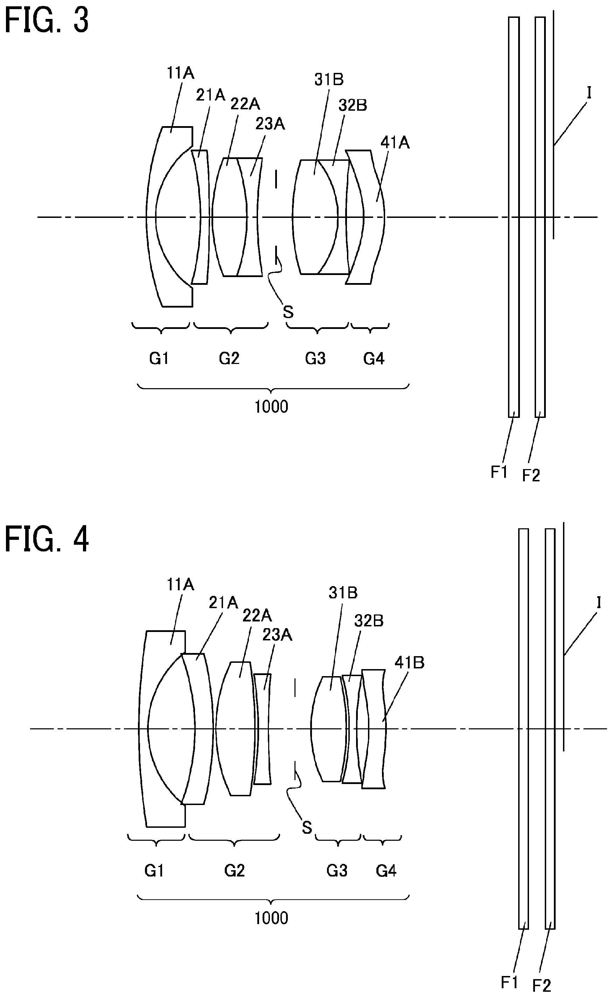

   FIG. 3 is a cross-sectional view of an image-forming lens according to Numerical Example 3 of the present disclosure.
[FIG. 4]
   FIG. 4 is a cross-sectional view of an image-forming lens according to Numerical Example 4 of the present disclosure.
[FIG. 5]

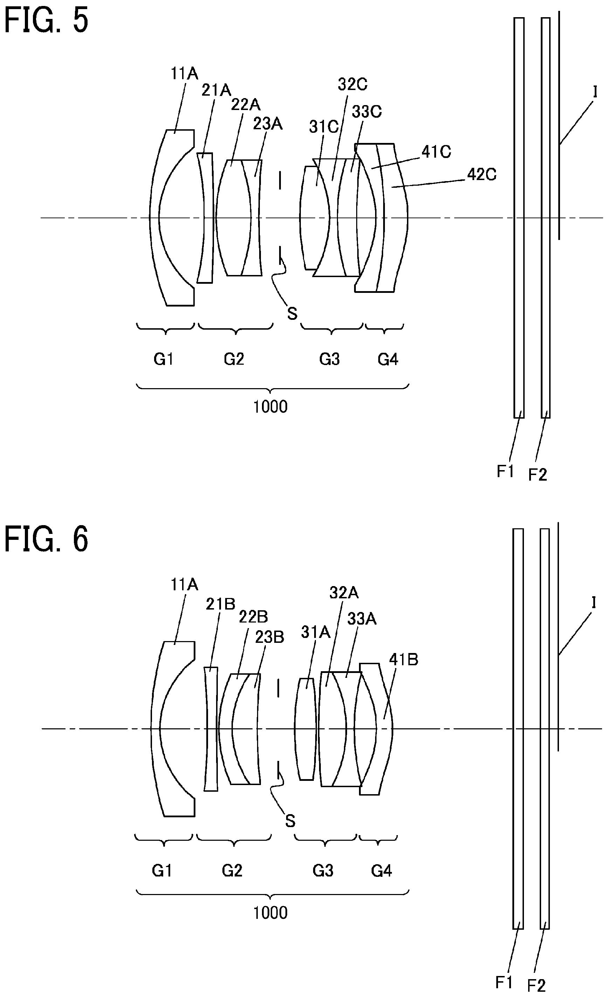

   FIG. 5 is a cross-sectional view of an image-forming lens according to Numerical Example 5 of the present disclosure.
[FIG. 6]
   FIG. 6 is a cross-sectional view of an image-forming lens according to Numerical Example 6 of the present disclosure.
[FIG. 7]

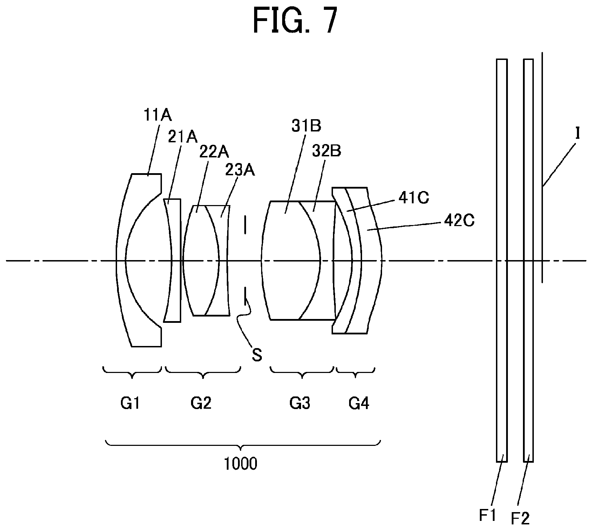

   FIG. 7 is a cross-sectional view of an image-forming lens according to Numerical Example 7 of the present disclosure.
[FIGS. 8A, 8B, 8C, and 8D]

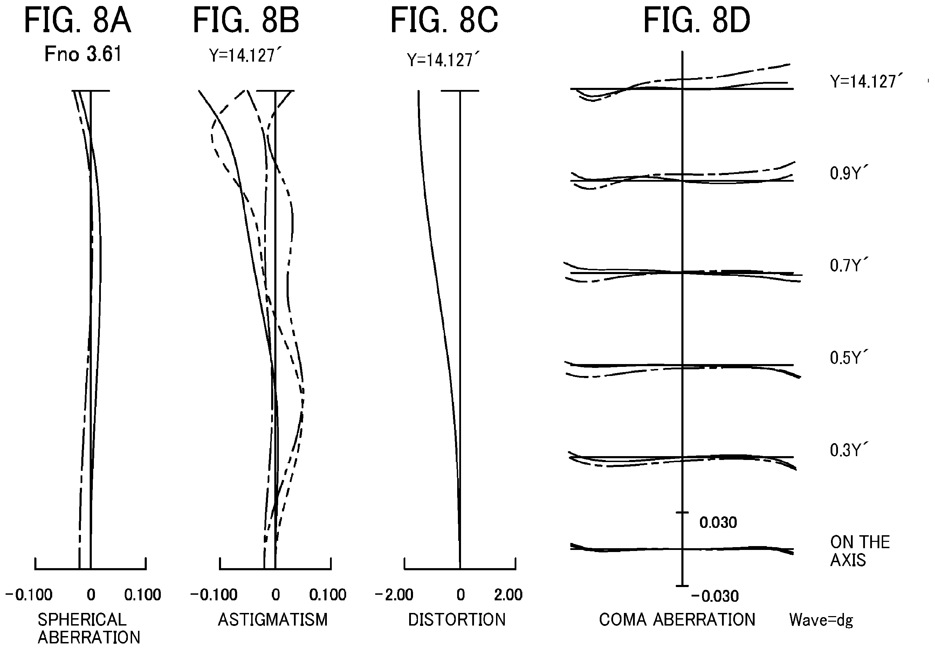

   FIGS. 8A, 8B, 8C, and 8D are aberration curve diagrams of the image-forming lens of FIG. 1 according to Numerical Example 1.
[FIGS. 9A, 9B, 9C, and 9D]

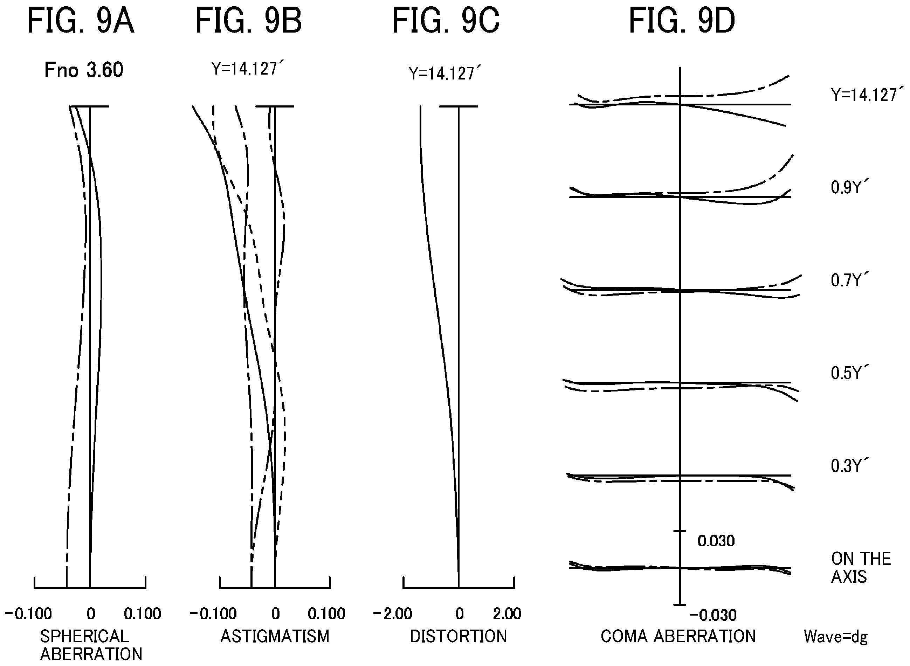

   FIGS. 9A, 9B, 9C, and 9D are aberration curve diagrams of the image-forming lens of FIG. 2 according to Numerical Example 2.
[FIGS. 10A, 10B, 10C, and 10D]

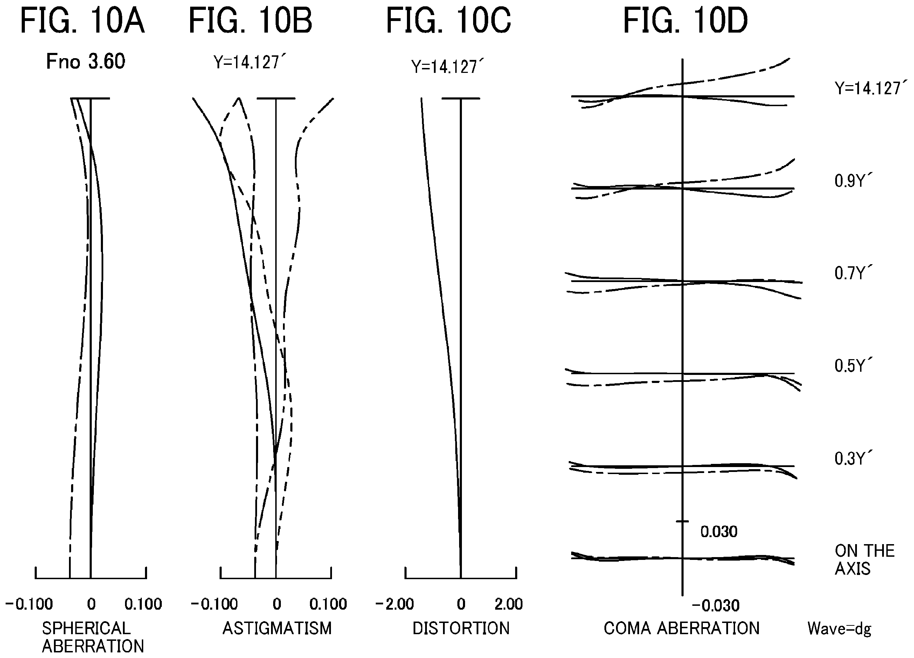

   FIGS. 10A, 10B, 10C, and 10D are aberration curve diagrams of the image-forming lens of FIG. 3 according to Numerical Example 3.
[FIGS. 11A, 11B, 11C, and 11D]

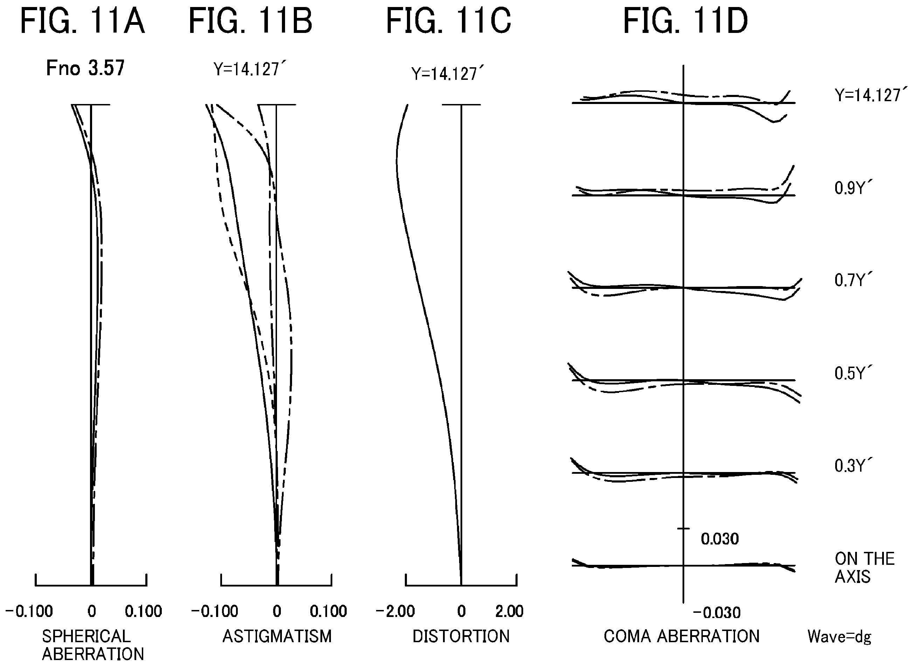

   FIGS. 11A, 11B, 11C, and 11D are aberration curve diagrams of the image-forming lens of FIG. 4 according to Numerical Example 4.
[FIGS. 12A, 12B, 12C, and 12D]

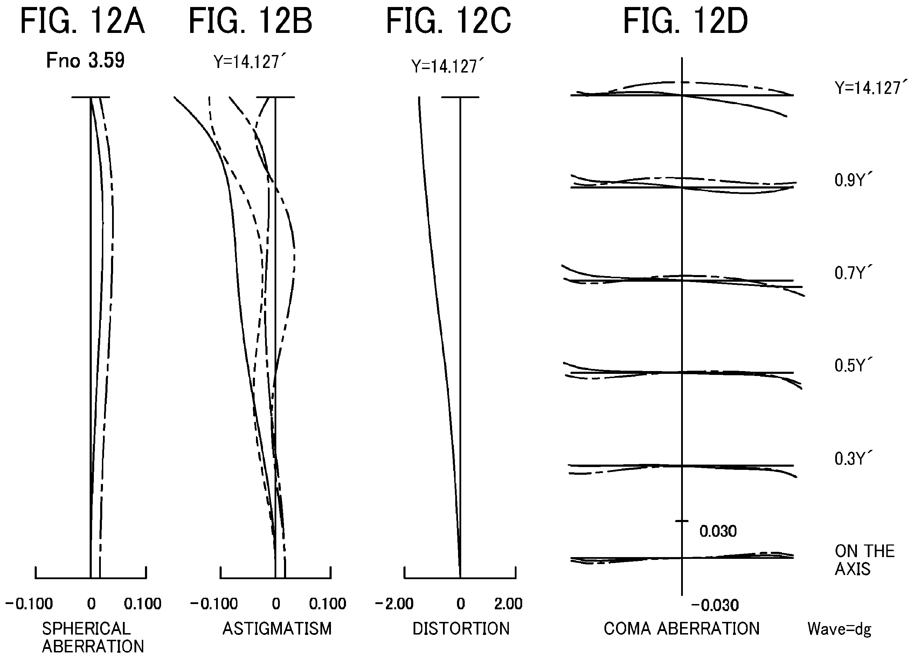

   FIGS. 12A, 12B, 12C, and 12D are aberration curve diagrams of the image-forming lens of FIG. 5 according to Numerical Example 5.
[FIGS. 13A, 13B, 13C, and 13D]

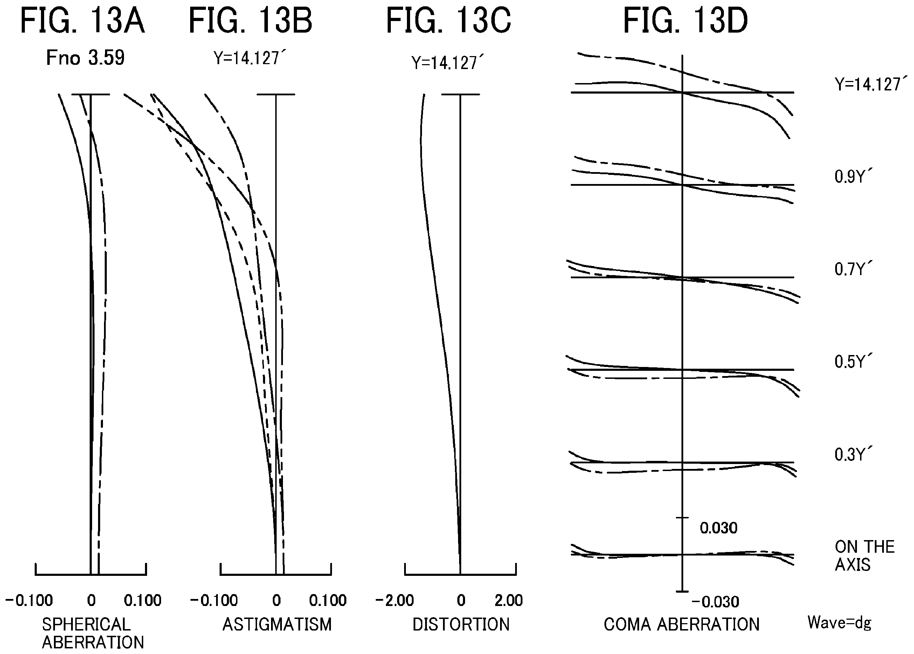

   FIGS. 13A, 13B, 13C, and 13D are aberration curve diagrams of the image-forming lens of FIG. 6 according to Numerical Example 6.
[FIGS. 14A, 14B, 14C, and 14D]

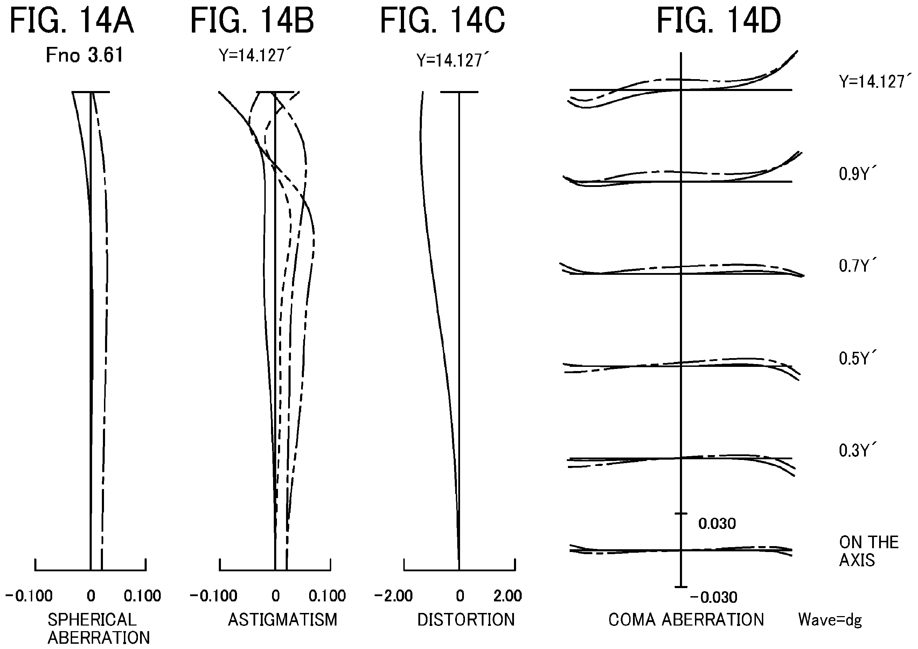

   FIGS. 14A, 14B, 14C, and 14D are aberration curve diagrams of the image-forming lens of FIG. 7 according to Numerical Example 7.
[FIGS. 15A and 15B]

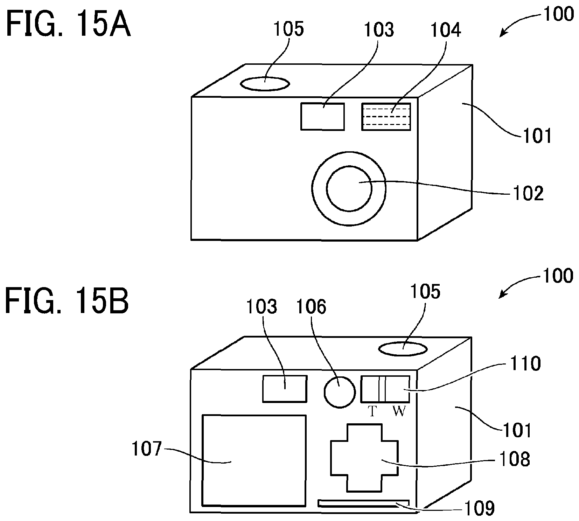

   FIGS. 15A and 15B are external views of a digital camera according to an embodiment of the present disclosure.
[FIG. 16]

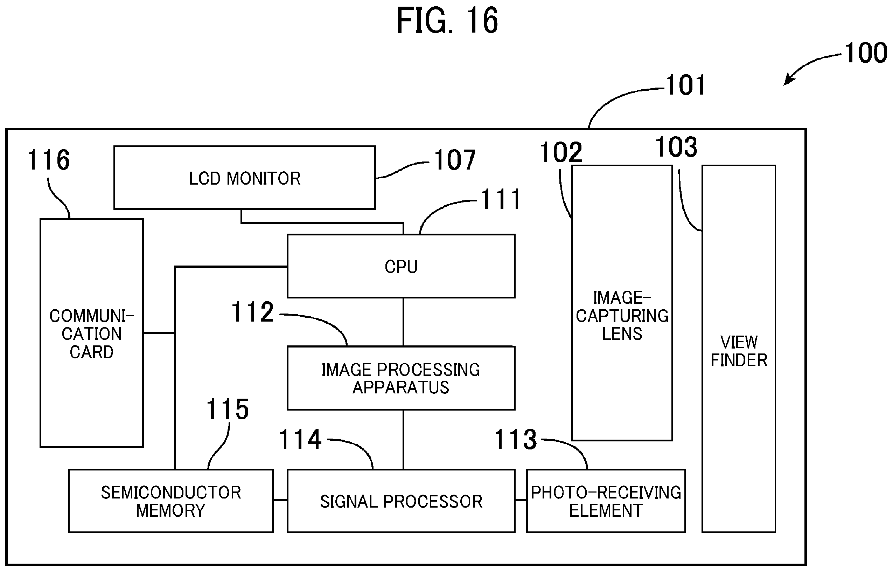

   FIG. 16 is a block diagram of a hardware configuration of a digital camera according to an embodiment of the present disclosure.

### [Description of Embodiments]

The terminology used herein is for the purpose of describing particular embodiments only and is not intended to be limiting of the present invention. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected.

An image-forming lens according to an embodiment of the present disclosure can be used in, for example, an optical system of a camera lens mounted on a digital camera. The image-forming lens according to an embodiment of the present disclosure is an ultrawide prime lens with a focal length of 21 millimeters (mm) that is converted to the equivalent of a 35 mm film camera, which is commonly referred to as Leica format. The image-forming lens according to an embodiment of the present disclosure aims to achieve both a super-wide angle of view and a reduction in size. The image-forming lens according to an embodiment of the present disclosure aims to achieve a wider angle of view by changing the focal length from 28 mm to 21 mm. This configuration is, for example, based on the above-described PTL 3, which has been patented by the applicant of the present application.

The image-forming lens according to an embodiment of the present disclosure is, for example, an optical system (e.g., a capturing optical system and a projection optical system) installed in a digital camera (e.g., an interchangeable lens camera, a digital single-lens reflex (DSLR) camera), an information terminal device (e.g., a portable information terminal device), a video camera, a film camera, an optical sensor, and a projection optical system.

The digital camera market has deeply penetrated worldwide, and the demands from users regarding digital cameras are diverse. Among such demands, the category of compact cameras equipped with high-performance prime lenses has garnered consistent support from users and is highly anticipated. In addition to high-performance lenses, users also demand lenses having a small F-number, i.e., a large aperture while remaining compact and lightweight.

For enhanced performance, several requirements need to be met. For example, a resolution that is suitable for an image sensor ranging from 20 to 40 million pixels is to be achieved. Moreover, with the aperture fully open, coma flares are to be minimized, and a dot image is to remain undistorted with high contrast even to the edges of the angle of view. Further, areas with minimal chromatic aberration and significant luminance differences are not to produce undesirable coloration, and with reduced distortion aberration, straight lines can be depicted as straight.

To achieve a larger diameter, preferably, an F-number is less than approximately 4 to differentiate from typical compact cameras equipped with zoom lenses.

For a reduction in size, the total optical length and the diameter of the lens are to be reduced. For the reduction in size during non-shooting times, a mechanism known in the art as the 'retractable lens type' might be considered. This mechanism shortens the total lens length by reducing air gaps (e.g., an air gap between optical components in front of and behind the aperture stop and an air gap corresponding to a back focus) on the optical axis within a capturing optical system during non-shooting times.

Some users strongly desire ultra-wide-angle lenses. In consideration of such desires, image-capturing lenses preferably have angles of view equivalent to a focal length of 21 mm as equated to a 35 mm film camera, which is commonly known as the Leica format. This means angles of view of 88 degrees or more, i.e., half-angles of view of approximately 44 degrees or more.

Among many kinds of image-forming lenses for digital cameras, a typical configuration for wide-angle prime lenses is the retrofocus system. In this configuration, a lens group with negative refractive power is disposed on the object side, and a lens group with positive refractive power is on the image side. Given the characteristics of area sensors with color filters and micro-lenses for the pixels, respectively, there is a desire to position the exit pupil further from an image plane, enabling peripheral rays to impinge on the sensor at nearly perpendicular angles. The retrofocus system is adopted to fulfill such a desire.

However, as understood from the original intent of the retrofocus system, which is to achieve a back focus suitable for using a wide-angle lens as an interchangeable lens for single-lens reflex cameras, the total lens length (i.e., the distance between a surface closest to the object and the image plane) tends to be long.

Currently, with improvements and optimization of, for example, on-chip micro-lenses and advancements in image processing technology, image sensors with relatively large diagonal sizes ranging from approximately 20 mm to 45 mm handle light rays hitting the sensor at an oblique angle without causing any trouble. The requirement for peripheral light rays to hit the sensor vertically has relaxed compared to the past, allowing for the selection of lens types more suited for miniaturization.

Examples of a lens type more suitable for a reduction in size than the retrofocus system include a substantially symmetrical type and a telephoto type with a lens group having negative refractive power on the image side. PTLs 1 to 4 described above disclose such types of image-forming lenses as comparative examples.

PTL 1 describes a relatively compact wide-angle lens that closely resembles a symmetrical system with negative power distributed at both the portion closest to the object and the portion closest to the image. However, the lens has a slightly small angle of view of approximately 81 degrees, leaving space for enhancement in its angle of view.

PTL 2 describes a configuration that closely resembles a symmetrical system with negative power distributed at both the portion closest to the object and the portion closest to the image. This configuration has been miniaturized and has also been made larger in aperture. However, its maximum angle of view is slightly small at approximately 80 degrees. This leaves space for enhancement in the angle of view.

PTL 3 describes a configuration that has a certain level of performance in terms of reduction in size, increase in aperture diameter, and good image-forming performance. However, this configuration exhibits features of the telephoto type, leaving space for ultra-wide angle capabilities.

PTL 4 describes a configuration that maintains the characteristics of the retrofocus system and has a certain level of performance in terms of the increase in aperture diameter and ultra-wide angle capabilities. However, this configuration has a significant total thickness ranging from the surface closest to the object to the surface closest to the image, leaving space for size reduction during non-shooting times.

Embodiments of the present disclosure have been made in view of the above-described points and achieve a compact and lightweight image-forming lens, an interchangeable lens incorporating the image-forming lens, an image-capturing apparatus incorporating the image-forming lens, and an information processing apparatus incorporating the image-forming lens. The image-forming lens according to embodiments of the present disclosure includes a wide-angle lens with high performance, an angle of view of approximately 88 degrees, and a large aperture diameter having an F-number of less than approximately 4.

Typically, an increase in the angle of view (or widening the angle) tends to exacerbate aberrations, such as coma aberration, astigmatism, lateral chromatic aberration, field curvature, and distortion. In addition to controlling these aberrations, widening the angle causes an increase in the length of the optical system in both the radial direction and the optical-axis direction to accommodate wide-angle light rays. The image-forming lens according to embodiments of the present disclosure has been optimally designed in terms of lens configuration and various conditional expressions to address challenges related to aberration correction and size increase.

An image-forming lens 1000 according to an embodiment of the present disclosure consists of, sequentially from an object side toward an image side, a first lens group G1 having negative refractive power, a second lens group G2 having positive refractive power, an aperture stop S, a third lens group G3 having positive refractive power, and a fourth lens group G4. The fourth lens group G4 has positive refractive power or negative refractive power. In Numerical Examples 1 to 3, and 7 of the present disclosure below, the fourth lens group G4 has positive refractive power. In Numerical Examples 4 to 6 of the present disclosure below, the fourth lens group G4 has negative refractive power. In other words, an image-forming lens according to Numerical Examples 1 to 3, and 7 has a four-group configuration of negative-positive-positive-positive powers, and an image-forming lens according to Numerical Examples 4 to 6 has a four-group configuration of negative-positive-positive-negative powers.

In all the Numerical Examples 1 to 7, the first lens group G1 consists of a negative lens 11A.

In Numerical Examples 1 to 5, and 7, the second lens group G2 consists of, sequentially from the object side, a negative lens 21A, a positive lens 22A, and a negative lens 23A.

In Numerical Example 6, the second lens group G2 consists of, sequentially from the object side, a negative lens 21B, a negative lens 22B, and a positive lens 23B.

In some embodiments that are useful for understanding the invention, the second lens group G2 includes an additional positive lens disposed on the object side relative to the negative lens 21A or between the negative lens 21A and the positive lens 22A. In some other embodiments that are useful for understanding the invention, the second lens group G2 includes an additional positive lens disposed on the object side relative to the negative lens 21B or between the negative lens 21B and the negative lens 22B.

In Numerical Examples 1, 2, and 6, the third lens group G3 consists of, sequentially from the object side, a positive lens 31A, a positive lens 32A, and a negative lens 33A.

In Numerical Examples 3, 4, and 7, the third lens group G3 consists of, sequentially from the object side, a positive lens 31B and a negative lens 32B.

In Numerical Example 5, the third lens group G3 consists of, sequentially from the object side, a positive lens 31C, a negative lens 32C, and a positive lens 33C.

In Numerical Examples 1 to 3, the fourth lens group G4 consists of a positive lens 41A.

In Numerical Examples 4 and 6, the fourth lens group G4 consists of a negative lens 41B.

In Numerical Examples 5 and 7, the fourth lens group G4 consists of, sequentially from the object side, a negative lens 41C and a positive lens 42C.

The fourth lens group G4 has the weakest refractive power among all the lens groups (i.e., the first lens group G1, the second lens group G2, the third lens group G3, and the fourth lens group G4). The power of the fourth lens group G4 can be either positive or negative. However, in the fourth lens group G4, the radius of curvature of the lens surface closest to the object is very close to the radius of curvature of the lens surface closest to the image.

The first lens group G1 consists of the negative lens 11A with a concave surface facing the image side.

The second lens group G2 consists of, sequentially from the object side toward the image side, the negative lens (21A; 21B) with a concave surface facing the object and a cemented lens (22A, 23A; 22B, 23B) having positive refractive power as a whole.

Alternatively, the second lens group G2 consists of, sequentially from the object side toward the image side, a negative meniscus lens (21A; 21B) with a concave surface facing the object and a positive lens or a cemented lens (22A, 23A; 22B, 23B) having positive refractive power as a whole.

Alternatively, the second lens group G2 consists of, sequentially from the object side toward the image side, a negative lens (21A) with a concave surface facing the object and a cemented lens (22A, 23A) that consists of, sequentially from the object side, a positive lens and a negative lens and has positive refractive power.

The third lens group G3 consists of a biconvex positive lens (31A; 31B) closest to the object and a negative lens (33A; 32B) with a concave surface facing the object, at a position closest to the image.

Alternatively, the third lens group G3 consists of a cemented lens (32A, 33A) of a negative lens closest to the image and a positive lens that is second closest to the image; and a positive lens (31A) on the object side relative to the cemented lens.

Alternatively, the third lens group G3 consists of a cemented lens (32A, 33A; 31B, 32B) of a negative lens closest to the image and a positive lens that is second closest to the image; and three or fewer elements (i.e., three or fewer optical elements).

Alternatively, the third lens group G3 consists of a positive lens (31A; 31B; 31C) closest to the object and a negative lens (33A; 32B; 32C) with a concave surface facing the object, on the image side relative to the positive lens (31A; 31B; 31C).

The fourth lens group G4 consists of one lens (41A; 41B) or a cemented lens (41C, 42C), in which the surface closest to the object is a concave surface facing the object, and the surface closest to the image is a convex surface facing the image.

Preferably, an air lens that includes the aperture stop S and has a meniscus shape with a convex surface facing the object is formed between the surface closest to the image in the second lens group G2 and the surface closest to the object in the third lens group G3.

The air lens in the present disclosure is defined as follows. In other words, the air lens refers to the air gap between a first surface on the image side of a first lens that is on the object side relative to a second lens and a second surface on the object side of the second lens that is on the image side relative to the first lens. These two lenses, i.e., the first lens and the second lens, are adjacent to and spaced apart from each other along the optical axis. The first surface on the image side of the first lens is a surface on the object side of the air lens, and the second surface on the object side of the second lens is a surface on the image side of the air lens. The shape of the air lens is defined by the first surface on the image side of the first lens and the second surface on the object side of the second lens.

In an image-forming lens 1000 according to an embodiment of the present disclosure, the aperture stop S is between positive powers, which are attributed to the positive lens or the cemented lens (22A, 23A; 22B, 23B) having positive refractive power as a whole in the second lens group G2 and the third lens group G3 or the positive lens (31A; 31B; 31C) included in the third lens group G3. Outside the positive powers along the optical axis, negative powers are arranged. The negative powers are attributed to the first lens group G1 (i.e., the negative lens 11A), the negative lens (21A; 21B) with a concave surface facing the object in the second lens group G2, the negative lens with a concave surface facing the object or the negative lens (33A; 32B; 32C) of the cemented lens in the third lens group G3, and the fourth lens group G4. In other words, the image-forming lens according to an embodiment of the present disclosure adopts a substantially symmetrical power arrangement. This configuration facilitates the correction of coma aberration, distortion, and lateral chromatic aberration.

The refractive power of the fourth lens group G4 is not limited to negative and may be positive. However, since the refractive power of the fourth lens group G4 is weaker than those of the other lens groups, the image-forming lens 1000 can still achieve a power arrangement close to the above-described substantially symmetrical power arrangement irrespective of the fourth lens group G4 having positive refractive power.

Further, the surface closest to the object in the fourth lens group G4 is designed to be concave to correspond to the concave shape of the surface closest to the image in the first lens group G1 and the surface closest to the object in the second lens group G2. This allows for a higher level of correction of the above-described aberrations.

A biconvex air lens is formed between the first lens group G1 and the second lens group G2. This biconvex air lens has negative refractive power and favorably adjusts the distribution of the refractive power between the first lens group G1 and the second lens group G2.

In the above-described configurations, the surface closest to the object in the second lens group G2 is designed to be concave (e.g., the surface closest to the object in the second lens group G2 is a negative meniscus lens). This achieves a smaller diameter of the first lens group G1 and facilitates the correction of the coma aberration for the lower rays. Further, the surface on the object side of the lens closest to the image in the third lens group G3 is designed to be concave. This facilitates the correction of the spherical aberration and reduces the sensitivity to manufacturing error within the third lens group G3. This achieves both miniaturization and higher performance of the image-forming lens 1000.

The image-forming lens 1000 according to an embodiment of the present disclosure has the above-described substantially symmetrical power arrangement, which is not a completely symmetrical power arrangement. If the power arrangement is made completely symmetrical, the challenge lies in enhancing the performance of camera lenses at reduced magnifications.

To avoid such a situation, the image-forming lens 1000 according to an embodiment of the present disclosure is designed as follows. The second lens group G2 is composed of two elements: a negative element and a positive element, which are separated from each other. This configuration allows for greater flexibility in correcting various aberrations. Further, the third lens group G3, which is disposed to face the second lens group G2 with the aperture stop S between the third lens group G3 and the second lens group G2, includes a positive lens and a negative lens. This configuration further enhances chromatic aberration correction performance.

Additionally, the third lens group G3 includes a cemented lens of a negative lens that is closest to the image and a positive lens that is second closest to the image. This configuration enhances the chromatic aberration correction performance and prevents an increase in sensitivity to manufacturing error, allowing for easier assembly. The third lens group G3 consists of three or fewer elements (i.e., three or fewer optical elements). This configuration prevents upsizing and facilitates assembly.

A lens element refers to a single lens unit that is integrated during assembly. A cemented lens is counted as one lens element regardless of how many lenses are cemented together. This means that, for example, three single lenses, three sets of cemented lenses, one single lens with two sets of cemented lenses, and two single lenses with one set of cemented lenses all correspond to three or fewer elements (i.e., three or fewer optical elements).

Further, a cemented lens is used for the second lens group G2 and the fourth lens group G4 as needed to correct chromatic aberrations such as lateral chromatic aberration and coma aberration more favorably.

The fourth lens group G4 is designed to have a weaker refractive power than those of the other lens groups. This allows for control of the exit pupil position, enabling an appropriate incident angle of the chief ray on the image plane at a peripheral image height.

Preferably, an air lens that includes the aperture stop S and has a meniscus shape with a convex surface facing the object is formed between the surface closest to the image in the second lens group G2 and the surface closest to the object in the third lens group G3. Such an air lens allows for a well-balanced compensation of aberrations in front of and behind the aperture stop S, through which a wide light beam passes. The coma aberration becomes more challenging to address as the angle of view widens. However, the coma aberration can be favorably corrected by preventing excessive compensation of aberrations, particularly spherical aberration. This strategy leads to reduced sensitivity to manufacturing errors in spherical aberration for the rear lens group (i.e., the third lens group G3 and the fourth lens group G4) behind the aperture stop S relative to the front lens group (i.e., the first lens group G1 and the second lens group G2) in front of the aperture stop S.

With such configurations, the image-forming lens according to an embodiment of the present disclosure is optimized for the reduction in size, larger diameter, wider angle of view, and higher performance. This achieves the reduction in size, larger diameter, wider angle of view, and higher performance while comprehensively producing "effects which have not been achieved in the related art".

Preferably, the image-forming lens 1000 according to an embodiment of the present disclosure satisfies a conditional expression (1) below. $0 < \left(r1s+r2s\right) / \left(r1s-r2s\right) < 10$ In the above conditional expression, r1s indicates the radius of curvature of a lens surface adjacent to the object side of the aperture stop, and r2s indicates the radius of curvature of a lens surface adjacent to the image side of the aperture stop.

Preferably, the image-forming lens 1000 according to an embodiment of the present disclosure satisfies a conditional expression (1A) below within the range defined by the conditional expression (1). $0.5 < \left(r1s+r2s\right) / \left(r1s-r2s\right) < 7.5$

The conditional expressions (1) and (1A) define an appropriate range for the symmetry of the shapes of surfaces facing each other across the aperture stop S. Satisfying the conditional expression (1) allows for a more favorable correction of astigmatism and coma aberration and achieves more uniform high quality across the entire screen. This effect can be more pronounced by satisfying the conditional expression (1A).

If the value exceeds the upper limit or falls below the lower limit defined by the conditional expression (1), the power of the surface closest to the object within the third lens group G3 becomes significantly smaller than the surface closest to the image within the second lens group G2. This might result in increased coma aberration and astigmatism. With such power becoming excessively small, off-axis rays pass through the third lens group G3 at a high position, and thus the third lens group G3 might have an increased diameter.

Preferably, the image-forming lens 1000 according to an embodiment of the present disclosure satisfies a conditional expression (2) below. $0.5 < L 1 h / Sh < 1.1$

In the above conditional expression, L1h indicates the height from an optical axis of an axial marginal ray on a surface on the object side of a lens closest to the object in an optical system of the image-forming lens, and Sh indicates the height from the optical axis of the axial marginal ray on the aperture stop.

Preferably, the image-forming lens 1000 according to an embodiment of the present disclosure satisfies a conditional expression (2A) below within the range defined by the conditional expression (2). $0.65 < L 1 h / Sh < 0.95$

The conditional expressions (2) and (2A) define an appropriate range for the diameter of an on-axis light beam incident on the surface on the object side of the lens closest to the object in the optical system, relative to the diameter of the aperture stop. Satisfying the conditional expression (2) achieves good performance in a compact size by balancing the powers in front of and behind the aperture stop S. This effect can be more pronounced by satisfying the conditional expression (2A).

If the value exceeds the upper limit of the conditional expression (2), the lens system as a whole becomes overly biased toward the telephoto type, increasing the difficulty of aberration correction at the peripheral angles of view. This also causes off-axis rays to pass through the first lens group G1 and the second lens group G2 at elevated positions, possibly increasing their diameters.

If the value falls below the lower limit of the conditional expression (2), the lens system as a whole becomes overly biased toward the retrofocus type, possibly resulting in an excessively long total lens length.

Preferably, the image-forming lens 1000 according to an embodiment of the present disclosure satisfies a conditional expression (3) below. $- 6 < r 2 F / f < - 0.5$

In the above conditional expression, r2F indicates the radius of curvature of a surface closest to the object in the second lens group, and f indicates the focal length of a lens system as a whole of the image-forming lens when the image-forming lens is focused on an object at infinity.

Preferably, the image-forming lens 1000 according to an embodiment of the present disclosure satisfies a conditional expression (3A) below within the range defined by the conditional expression (3). $- 5.5 < r 2 F / f < - 1$

The conditional expressions (3) and (3A) define a preferable range of the radius of curvature of the surface closest to the object in the second lens group G2. The surface closest to the object in the second lens group G2 is concave. In this configuration, as the absolute value of its radius of curvature r2F decreases, the negative power of the lens surface (i.e., the surface closest to the object in the second lens group G2) increases. Satisfying the conditional expression (3) allows for a more favorable correction of astigmatism and coma aberration and achieves more uniform high quality across the entire screen. This effect can be more pronounced by satisfying the conditional expression (3A).

If the value exceeds the upper limit of the conditional expression (3), the coma aberration of the lower rays easily occurs in the negative direction at an intermediate image height, and the spherical aberration easily occurs in the positive direction.

If the value falls below the lower limit of the conditional expression (3), the coma aberration of the lower rays easily occurs in the positive direction at the intermediate image height, and astigmatism also easily occurs. Further, the off-axis rays passing through the first lens group G1 are likely to travel at elevated positions, easily increasing the diameter of the first lens group G1.

Preferably, the image-forming lens 1000 according to an embodiment of the present disclosure satisfies a conditional expression (4) below. $0.5 < r 3 R / f < 10$

In the above conditional expression, r3R indicates the radius of curvature of a surface closest to the image in the third lens group, and f indicates the focal length of a lens system as a whole of the image-forming lens when the image-forming lens is focused on an object at infinity.

Preferably, the image-forming lens 1000 according to an embodiment of the present disclosure satisfies a conditional expression (4A) below within the range defined by the conditional expression (4). $0.55 < r 3 R / f < 9$

The conditional expressions (4) and (4A) define a preferable range of the radius of curvature of the surface closest to the image in the third lens group G3. The surface closest to the image in the third lens group G3 is concave. In this configuration, as the absolute value of its radius of curvature r3R decreases, the negative power of the lens surface (i.e., the surface closest to the image in the third lens group G3) increases. Satisfying the conditional expression (4) allows for favorable correction of various aberrations and achieves a high-performance image-forming lens more suitable for a reduction in size. This effect can be more pronounced by satisfying the conditional expression (4A).

If the value exceeds the upper limit of the conditional expression (4), the coma aberration of the upper rays easily occurs in the negative direction at the peripheral image height, and astigmatism easily occurs. Further, the off-axis rays passing through the fourth lens group G4 are likely to travel at elevated positions, easily increasing the diameter of the fourth lens group G4.

If the value falls below the lower limit of the conditional expression (4), the coma aberration of the upper rays easily occurs in the positive direction at the peripheral image height, and field curvature is likely to be overcorrected.

Preferably, the image-forming lens 1000 according to an embodiment of the present disclosure satisfies a conditional expression (5) below. $- 0.4 < f 1 / f 4 < 0.4$

In the above conditional expression, f1 indicates the focal length of the first lens group, and f4 indicates the focal length of the fourth lens group.

Preferably, the image-forming lens 1000 according to an embodiment of the present disclosure satisfies a conditional expression (5A) below within the range defined by the conditional expression (5). $- 0.3 < f 1 / f 4 < 0.2$

The conditional expressions (5) and (5A) define a good balance of the refractive powers of the first lens group G1 and the fourth lens group G4. The first lens group G1 has negative refractive power. In this configuration, when the conditional expressions (5) and (5A) are satisfied, the refractive power of the fourth lens group G4 can be either positive or negative. Since the fourth lens group G4 has the weakest power, the absolute value of the focal lengths f4 is larger than the absolute values of the focal lengths of the other lens groups.

Satisfying the conditional expression (5) enhances the reduction in size and high performance while controlling the exit pupil position. This effect can be more pronounced by satisfying the conditional expression (5A).

If the value exceeds the upper limit of the conditional expression (5), both the refractive powers of the first lens group G1 and the fourth lens group G4 become negative, and the refractive power of the fourth lens group G4 becomes larger than the refractive power of the first lens group G1.

As a result, the image-forming lens becomes likely to exhibit strong telephoto-type characteristics as a lens system. This moves a principal point toward the object and excessively shortens the total lens length. Thus, the flexibility of correcting various aberrations becomes more likely to be limited. Alternatively, the sensitivity to manufacturing error may increase. In addition, the exit pupil moves toward the image, and the incident angle of the chief ray on the image plane at the peripheral image height tends to increase.

If the value falls below the lower limit of the conditional expression (5), the negative refractive power of the first lens group G1 becomes relatively large, leading the lens systems to exhibit strong retrofocus-type characteristics. This moves the principal point toward the image and makes it difficult to shorten the total lens length. In addition, the exit pupil moves toward the object, and the diameter of the fourth lens group G4 easily increases.

Preferably, the surface closest to the image in the third lens group G3 is concave to achieve even better performance. This configuration allows for a biconvex air lens between the third lens group G3 and the fourth lens group G4. This biconvex air lens has negative refractive power, enabling a well-balanced distribution of refractive powers between the third lens group G3 and the fourth lens group G4. In addition, the surface closest to the object in the fourth lens group G4 is designed to be concave to correspond to the surface closest to the image in the first lens group G1. Similarly, the surface closest to the image in the third lens group G3 is designed to be concave to correspond to the concave surface of the surface closest to the object in the second lens group G2. This configuration achieves the correction of coma aberration, distortion, and lateral chromatic aberration at a higher level.

Preferably, the image-forming lens 1000 according to an embodiment of the present disclosure satisfies a conditional expression (6) below. $1.0 < r 2 R / r 3 F < 10$

In the above conditional expression, r2R indicates the radius of curvature of the surface closest to the image in the second lens group, and r3F indicates the radius of curvature of the surface closest to the object in the third lens group.

The surface shapes facing each other across the aperture stop S are optimized to satisfy the conditional expression (6). This achieves the substantially-symmetrical refractive-power arrangement of the two surfaces facing each other across the aperture stop S. Satisfying the conditional expression (6) allows for a more favorable correction of astigmatism and coma aberration and achieves a more uniform high quality across the entire screen.

If the value exceeds the upper limit or falls below the lower limit of the conditional expression (6), the substantially-symmetrical refractive-power arrangement of the two surfaces facing each other across the aperture stop S becomes difficult to achieve.

Preferably, the image-forming lens 1000 according to an embodiment of the present disclosure satisfies a conditional expression (7) below. $55 < νdn 1 < 85$

In the above conditional expression, vdn1 indicates an Abbe number of the negative lens of the first lens group with respect to the d-line.

Satisfying the conditional expression (7) allows for the selection of appropriate glass material for a lens closest to the object (i.e., the lens closest to the object in the first group G1) that is exposed to the external environment while maintaining a balance in chromatic aberration correction. This enables favorable correction of both axial chromatic aberration and lateral chromatic aberration.

If the value exceeds the upper limit of the conditional expression (7), the optical material for the negative lens 11A of the first lens group G1 is likely to be soft and easily scratched. Further, its chemical durability decreases, making the negative lens 11A unsuitable to be used as the lens closest to the object that is exposed to the external environment.

If the value falls below the lower limit of the conditional expression (7), it becomes challenging to maintain a balance in the chromatic aberration correction and favorably correct both the axial chromatic aberration and lateral chromatic aberration.

Preferably, the image-forming lens 1000 according to an embodiment of the present disclosure satisfies a conditional expression (8) below. $- 3.0 < f 1 / f < - 0.6$

In the above conditional expression, f1 indicates the focal length of the first lens group, and f indicates the focal length of the lens system as a whole of the image-forming lens when the image-forming lens is focused on an object at infinity.

The conditional expression (8) defines a preferable range of the refractive power of the first lens group G1. Satisfying the conditional expression (8) achieves a significant reduction in field curvature, a high flatness of the image plane, and high contrast up to the edges of the screen.

If the value exceeds the upper limit of the conditional expression (8), the refractive power of the first lens group G1 becomes excessively strong. This causes astigmatism and coma aberration to more likely remain, making it challenging to maintain high image-forming performance up to the edges of the screen.

If the value falls below the lower limit of the conditional expression (8), the refractive power of the first lens group G1 becomes excessively weak, leading to a higher likelihood of under-correction for field curvature. Thus, maintaining the flatness of the image plane becomes challenging.

Preferably, the image-forming lens 1000 according to an embodiment of the present disclosure satisfies a conditional expression (9) below. $1.75 < ndP 2 - 3 < 2.06$

In the above conditional expression, ndP2-3 indicates the average refractive index for the d-line of the positive lenses included in the second lens group and the third lens group.

Satisfying the conditional expression (9) allows for the selection of a lens material (i.e., a glass material) in consideration of the refractive index range and cost of available optical glasses and also achieves favorable correction of field curvature and coma aberration.

If the value exceeds the upper limit of the conditional expression (9), a lens material (i.e., a glass material) can be selected in consideration of the refractive index range and cost of available optical glasses.

If the value falls below the lower limit of the conditional expression (9), the correction for field curvature easily becomes insufficient, and the inward coma aberration is more likely to remain at the intermediate image height, which is not undesirable.

Preferably, the image-forming lens 1000 according to an embodiment of the present disclosure satisfies a conditional expression (10) below. $1.0 < DT / f < 1.8$

In the above conditional expression, DT indicates the distance between the surface closest to the object in the first lens group and the surface closest to the image in the fourth lens group, and f indicates the focal length of the lens system as a whole of the image-forming lens when the image-forming lens is focused on an object at infinity.

The conditional expression (10) defines the ratio of the total lens thickness to the focal length of the lens system as a whole.

Satisfying the conditional expression (10) allows for favorable correction of various aberrations while achieving a sufficient reduction in size.

If the value exceeds the upper limit of the conditional expression (10), a sufficient total lens thickness is achieved in relation to the focal length, which provides advantages in aberration correction. However, this might result in a larger lens size.

If the value falls below the lower limit of the conditional expression (10), the lens is excessively reduced in size, making the aberration correction challenging.

Preferably, the image-forming lens 1000 according to an embodiment of the present disclosure satisfies a conditional expression (11) below. $2.0 < L / f < 2.7$

In the above conditional expression, L indicates the distance between the lens closest to the object in the first lens group and the image plane when the lens system is focused at an object at infinity, and f indicates the focal length of the lens system as a whole of the image-forming lens when the image-forming lens is focused on an object at infinity.

The conditional expression (11) defines the most effective lens length of the lens system, i.e., the distance between the image plane and the surface closest to the object in the first lens group. Satisfying the conditional expression (11) allows for favorable correction of various aberrations while achieving a sufficient reduction in size.

If the value exceeds the upper limit of the conditional expression (11), a sufficient total lens length is achieved in relation to the focal length, which provides advantages in aberration correction. However, this might result in a larger lens size.

If the value falls below the lower limit of the conditional expression (11), the lens is excessively reduced in size, making the aberration correction challenging.

Preferably, the image-forming lens 1000 according to an embodiment of the present disclosure satisfies conditional expressions (12) and (13) below. $0.8 < Y ′ / f < 1.2$ $0.7 < tan \left(θPmax\right) < 1.0$

In the above conditional expression, Y' indicates the maximum image height on the imaging plane, and f indicates the focal length of the lens system as a whole of the image-forming lens when the image-forming lens is focused on an object at infinity. Moreover, θPmax indicates the incident angle of the chief ray reaching the maximum image height on the image plane.

Satisfying the conditional expression (12) can define the angle of view that provides the most favorable performance of an image-forming lens. If the value exceeds the upper limit or falls below the lower limit defined by the conditional expression (12), the angle of view of the image-forming lens deviates from its optimal range in which the image-forming lens performs best.

Satisfying the conditional expression (13) can define the incident angle of the off-axis rays on the image plane, which provides the most favorable performance in an image-forming lens. If the value exceeds the upper limit or falls below the lower limit defined by the conditional expression (13), the incident angle of the off-axis rays on the image plane deviates from its optimal range in which the image-forming lens performs best.

In the image-forming lens according to an embodiment of the present disclosure, preferably, aspherical surfaces are incorporated into the first lens group G1 and the fourth lens group G4 to enhance the correction of various aberrations such as spherical aberration, coma aberration, and distortion.

Preferably, the image-forming lens 1000 according to an embodiment of the present disclosure satisfies a conditional expression (14) below. $- 0.4 < f 3 - 4 / f 1 - 2 < 0.4$ where f1-2 indicates the combined focal length of the first lens group and the second lens group, and f3-4 indicates the combined focal length of the third lens group and the fourth lens group.

Preferably, the image-forming lens 1000 according to an embodiment of the present disclosure satisfies a conditional expression (14A) below within the range defined by the conditional expression (14). $- 0.25 < f 3 - 4 / f 1 - 2 < 0.25$

The conditional expressions (14) and (14A) define appropriate ranges of the refractive powers of the first lens group G1 and the second lens group G2 with respect to the third lens group G3 and the fourth lens group G4, which serve as an image-forming group positioned behind the aperture stop S. Satisfying the conditional expression (14) achieves a reduction in size, larger aperture diameter, wider angle of view, and higher performance of the image-forming lens. This effect can be more pronounced by satisfying the conditional expression (14A).

If the value exceeds the upper limit of the conditional expression (14), the positive power of a front group (i.e., the first lens group G1 and the second lens group G2) in front of the aperture stop S becomes excessively strong, moving the entrance pupil toward the image along the optical axis. This leads to the peripheral rays passing through the front group (i.e., the first lens group G1 and the second lens group G2) in front of the aperture stop S at elevated heights, possibly enlarging the lens system in the radial direction.

If the value falls below the lower limit of the conditional expression (14), the negative power of the front group (i.e., the first lens group G1 and the second lens group G2) in front of the aperture stop S becomes excessively strong. This involves an undue strengthening of the positive power of the rear group (i.e., the third lens group G3 and the fourth lens group G4) behind the aperture stop S and reduces the flexibility of correcting aberration, possibly resulting in increased sensitivity to manufacturing error.

Numerical Examples 1 to 7 are specifically described below. In the aberration curve diagrams, the solid line and the broken line represent the d-line, and the dotted line and the double-dotted line represent the g-line. In astigmatism, the solid line and the dotted line represent the sagittal, and the broken line and the double-dotted line represent the meridional.

The meanings of the symbols in the present disclosure are as follows. The unit of length is millimeter (mm).
f: focal length of the optical system as a whole
F: F-number
w: half angle of view
Ya: maximum image height
R: radius of curvature
D: inter-surface spacing
Nd: refractive index for the d-line
vd: Abbe number for the d-line
BF: back focus
K: conic constant of an aspherical surface
A4: fourth-order aspherical coefficient
A6: sixth-order aspherical coefficient
A8: eighth-order aspherical coefficient
A10: tenth-order aspherical coefficient

An aspherical surface is defined by the following formulas using the reciprocal of a paraxial radius of curvature (paraxial curvature) C and a height H from the optical axis. $X = \frac{{CH}^{2}}{1 + √ \left(1-\left(1+K\right){C}^{2}{H}^{2}\right)} + {A}_{4} ⋅ {H}^{4} + {A}_{6} ⋅ {H}^{6} + {A}_{8} ⋅ {H}^{8} + {A}_{10} ⋅ {H}^{10}$

In Numerical Examples, the glass materials are optical glass types named by HOYA CORPORATION (HOYA) and OHARA INC. (OHARA).

### Numerical Example 1

FIGS. 1 and 8A to 8D and TABLES 1 to 4 pertain to an image-forming lens 1000 according to Numerical Example 1 of the present disclosure. FIG. 1 is a diagram illustrating the lens configuration of the image-forming lens 1000 according to Numerical Example 1. FIG. 1 is a cross-sectional view of the image-forming lens 1000 according to Numerical Example 1. FIGS. 8A, 8B, 8C, and 8D are aberration curve diagrams of the image-forming lens 1000 according to Numerical Example 1. TABLE 1 presents surface data, TABLE 2 presents aspherical data, TABLE 3 presents focal length data, and TABLE 4 presents conditional expression data.

The image-forming lens 1000 according to Numerical Example 1 consists of, sequentially from the object side, a first lens group G1 having negative refractive power, a second lens group G2 having positive refractive power, an aperture stop S, a third lens group G3 having positive refractive power, and a fourth lens group G4 having positive refractive power. Filters F1 and F2 (i.e., cover glasses) are disposed between the fourth lens group G4 and the image plane I.

The first lens group G1 consists of a negative meniscus lens (i.e., a negative lens 11A) with a convex surface facing the object.

The second lens group G2 consists of, sequentially from the object side, a negative meniscus lens (i.e., a negative lens 21A) with a convex surface facing the image, a biconvex positive lens 22A, and a biconcave negative lens 23A. The surface on the object side of the negative meniscus lens (i.e., the negative lens 21A) is aspherical. The biconvex positive lens 22A and the biconcave negative lens 23A are cemented together.

The third lens group G3 consists of, sequentially from the object side, a biconvex positive lens 31A, a positive meniscus lens (i.e., a positive lens 32A) with a convex surface facing the image, and a biconcave negative lens 33A. The positive meniscus lens (i.e., the positive lens 32A) and the biconcave negative lens 33A are cemented together.

The fourth lens group G4 consists of a positive meniscus lens (i.e., a positive lens 41A) with a convex surface facing the image. Both surfaces of the positive meniscus lens (i.e., the positive lens 41A) are aspherical.

**[TABLE 1]**

| f=13.9 | F=3.61 | w=46.3 | Ya=14.127 | | |
|---|---|---|---|---|---|
| SURFACE NUMBER | R | D | Nd | vd | GLASS TYPE (GLASS MATERIAL) |
| 1 | 23.625 | 0.700 | 1.49700 | 81.54 | S-FPM2 |
| 2 | 6.574 | 3.490 | | | |
| 3* | -26.619 | 0.700 | 1.68948 | 31.02 | L-TIM28 |
| 4 | -125.862 | 0.200 | | | |
| 5 | 11.555 | 2.820 | 1.90525 | 35.04 | S-LAH98 |
| 6 | -10.821 | 0.600 | 1.68430 | 26.81 | S-NPH7 |
| 7 | 21.915 | 1.500 | | | |
| 8 | APERTURE STOP | 1.235 | | | |
| 9 | 13.407 | 1.870 | 1.85400 | 40.38 | S-LAH98 |
| 10 | -37.040 | 0.350 | | | |
| 11 | -19.883 | 1.850 | 1.88300 | 40.76 | S-LAH59 |
| 12 | -7.868 | 0.600 | 1.75211 | 25.05 | FF8 |
| 13 | 110.687 | 1.330 | | | |
| 14* | -8.648 | 1.390 | 1.85400 | 40.38 | L-LAH94 |
| 15* | -8.454 | 9.350 | | | |
| 16 | ∞ | 0.770 | 1.56200 | 61.80 | OPTICAL GLASS |
| 17 | ∞ | 1.300 | | | |
| 18 | ∞ | 0.700 | 1.50000 | 64.00 | OPTICAL GLASS |
| 19 | ∞ | BF | | | |

| | | | | | |
|---|---|---|---|---|---|
| * indicates rotationally symmetric aspheric surface | | | | | |

**[TABLE 2]**

| SURFACE NUMBER | K | A4 | A6 | A8 | A10 |
|---|---|---|---|---|---|
| 3 | -0.6704 | -9.76999E-05 | -3.73079E-07 | -1.91918E-08 | 0.00000E+00 |
| 14 | -0.9583 | -3.70200E-05 | 2.86718E-05 | 9.49331E-07 | -5.04121E-08 |
| 15 | -0.9660 | 2.79491E-04 | 1.65754E-05 | 1.18765E-06 | -3.49979E-08 |

**[TABLE 3]**

| FOCAL LENGTH | |
|---|---|
| FIRST LENS GROUP | -18.58 |
| SECOND LENS GROUP | 20.01 |
| THIRD LENS GROUP | 18.64 |
| FOURTH LENG GROUP | 102.62 |
| FIRST TO SECOND LENS GROUPS | 165.16 |
| THIRD TO FOURTH LENS GROUPS | 17.51 |

**[TABLE 4]**

| CONDITIONAL EXPRESSION | |
|---|---|
| (1) | 4.152 |
| (2) | 0.838 |
| (3) | -1.922 |
| (4) | 7.991 |
| (5) | -0.181 |
| (6) | 1.635 |
| (7) | 81.54 |
| (8) | -1.341 |
| (9) | 1.881 |
| (10) | 1.345 |
| (11) | 2.271 |
| (12) | 1.020 |
| (13) | 0.789 |
| (14) | 0.106 |

### Numerical Example 2

FIGS. 2 and 9A to 9D and TABLES 5 to 8 pertain to an image-forming lens 1000 according to Numerical Example 2 of the present disclosure. FIG. 2 is a diagram illustrating the lens configuration of the image-forming lens 1000 according to Numerical Example 2. FIG. 2 is a cross-sectional view of the image-forming lens 1000 according to Numerical Example 2.

FIGS. 9A, 9B, 9C, and 9D are aberration curve diagrams of the image-forming lens 1000 according to Numerical Example 2. TABLE 5 presents surface data, TABLE 6 presents aspherical data, TABLE 7 presents focal length data, and TABLE 8 presents conditional expression data.

The configuration of the image-forming lens according to Numerical Example 2 is similar to that of the image-forming lens according to Numerical Example 1.

**[TABLE 5]**

| f=13.8 | F=3.60 | w=46.0 | Ya=14.127 | | |
|---|---|---|---|---|---|
| SURFACE NUMBER | R | D | Nd | vd | GLASS TYPE (GLASS MATERIAL) |
| 1 | 19.029 | 0.700 | 1.59522 | 67.73 | S-FPM2 |
| 2 | 6.780 | 3.350 | | | |
| 3* | -28.039 | 0.700 | 1.68948 | 31.02 | L-TIM28 |
| 4 | -144.624 | 0.200 | | | |
| 5 | 11.812 | 2.760 | 1.95375 | 32.32 | S-LAH98 |
| 6 | -13.189 | 0.600 | 1.77830 | 23.91 | S-NPH7 |
| 7 | 24.197 | 1.530 | | | |
| 8 | APERTURE STOP | 1.380 | | | |
| 9 | 16.289 | 1.910 | 1.95375 | 32.32 | S-LAH98 |
| 10 | -20.524 | 0.200 | | | |
| 11 | -21.881 | 2.020 | 1.81600 | 46.62 | S-LAH59 |
| 12 | -6.972 | 0.600 | 1.75211 | 25.05 | FF8 |
| 13 | 33.494 | 1.300 | | | |
| 14* | -8.998 | 1.380 | 1.86100 | 37.10 | L-LAH94 |
| 15* | -8.533 | 9.600 | | | |
| 16 | ∞ | 0.770 | 1.56200 | 61.80 | OPTICAL GLASS |
| 17 | ∞ | 1.300 | | | |
| 18 | ∞ | 0.700 | 1.50000 | 64.00 | OPTICAL GLASS |
| 19 | ∞ | BF | | | |

| | | | | | |
|---|---|---|---|---|---|
| * indicates rotationally symmetric aspheric surface | | | | | |

**[TABLE 6]**

| SURFACE NUMBER | K | A4 | A6 | A8 | A10 |
|---|---|---|---|---|---|
| 3 | -0.6704 | -9.76999E-05 | -3.73079E-07 | -1.91918E-08 | 0.00000E+00 |
| 14 | -0.9583 | -3.70200E-05 | 2.86718E-05 | 9.49331E-07 | -5.04121E-08 |
| 15 | -0.9660 | 2.79491E-04 | 1.65754E-05 | 1.18765E-06 | -3.49979E-08 |

**[TABLE 7]**

| FOCAL LENGTH | |
|---|---|
| FIRST LENS GROUP | -18.08 |
| SECOND LENS GROUP | 22.00 |
| THIRD LENS GROUP | 17.45 |
| FOURTH LENS GROUP | 80.81 |
| FIRST TO SECOND LENS GROUPS | -553.99 |
| THIRD TO FOURTH LENS GROUPS | 16.07 |

**[TABLE 8]**

| CONDITIONAL EXPRESSION | |
|---|---|
| (1) | 5.120 |
| (2) | 0.832 |
| (3) | -2.024 |
| (4) | 2.418 |
| (5) | -0.224 |
| (6) | 1.485 |
| (7) | 67.74 |
| (8) | -1.306 |
| (9) | 1.908 |
| (10) | 1.345 |
| (11) | 2.289 |
| (12) | 1.020 |
| (13) | 0.789 |
| (14) | 0.029 |

### Numerical Example 3

FIGS. 3 and 10A to 10D and TABLES 9 to 12 pertain to an image-forming lens 1000 according to Numerical Example 3 of the present disclosure. FIG. 3 is a diagram illustrating the lens configuration of the image-forming lens 1000 according to Numerical Example 3. FIG. 3 is a cross-sectional view of the image-forming lens 1000 according to Numerical Example 3. FIGS. 10A, 10B, 10C, and 10D are aberration curve diagrams of the image-forming lens 1000 according to Numerical Example 3. TABLE 9 presents surface data, TABLE 10 presents aspherical data, TABLE 11 presents focal length data, and TABLE 12 presents conditional expression data.

The configuration of the image-forming lens according to Numerical Example 3 is similar to that of the image-forming lens according to Numerical Example 1 except for the following points.
(1) The third lens group G3 consists of, sequentially from the object side, a biconvex positive lens 31B and a biconcave negative lens 32B. The biconvex positive lens 31B and the biconcave negative lens 32B are cemented together.

**[TABLE 9]**

| f=13.8 | F=3.60 | w=46.0 | Ya=14.127 | | |
|---|---|---|---|---|---|
| SURFACE NUMBER | R | D | Nd | vd | GLASS TYPE (GLASS MATERIAL) |
| 1 | 20.271 | 0.700 | 1.49700 | 81.54 | S-FPL51 |
| 2 | 6.645 | 3.450 | | | |
| 3* | -21.624 | 0.700 | 1.68948 | 31.02 | L-TIM28 |
| 4 | -63.677 | 0.200 | | | |
| 5 | 11.892 | 2.690 | 1.90525 | 35.04 | S-LAH93 |
| 6 | -13.510 | 0.790 | 1.68430 | 26.81 | FD270 |
| 7 | 25.420 | 1.470 | | | |
| 8 | APERTURE STOP | 1.210 | | | |
| 9 | 15.285 | 3.520 | 1.90525 | 35.04 | S-LAH93 |
| 10 | -6.846 | 0.600 | 1.77830 | 23.91 | S-NPH7 |
| 11 | 34.594 | 1.380 | | | |
| 12* | -7.746 | 1.600 | 1.85400 | 40.38 | L-LAH85V |
| 13* | -7.868 | 9.536 | | | |
| 14 | ∞ | 0.770 | 1.56200 | 61.80 | OPTICAL GLASS |
| 15 | ∞ | 1.300 | | | |
| 16 | ∞ | 0.700 | 1.50000 | 64.00 | OPTICAL GLASS |
| 17 | ∞ | BF | | | |

| | | | | | |
|---|---|---|---|---|---|
| * indicates rotationally symmetric aspheric surface | | | | | |

**[TABLE 10]**

| SURFACE NUMBER | K | A4 | A6 | A8 | A10 |
|---|---|---|---|---|---|
| 3 | -0.8966 | -8.48637E-05 | -4.68177E-07 | -1.18411E-08 | 0.00000E+00 |
| 12 | 0.4075 | 2.23352E-04 | 3.55494E-05 | 1.31376E-06 | -6.11111E-08 |
| 13 | -0.2337 | 4.23518E-04 | 1.59324E-05 | 1.31597E-06 | -3.51685E-08 |

**[TABLE 11]**

| FOCAL LENGTH | |
|---|---|
| FIRST LENS GROUP | -20.24 |
| SECOND LENS GROUP | 21.04 |
| THIRD LENS GROUP | 17.77 |
| FOURTH LENS GROUP | 116.04 |
| FIRST TO SECOND LENS GROUPS | 151.21 |
| THIRD TO FOURTH LENS GROUPS | 17.30 |

**[TABLE 12]**

| CONDITIONAL EXPRESSION | |
|---|---|
| (1) | 4.016 |
| (2) | 0.854 |
| (3) | -1.561 |
| (4) | 2.498 |
| (5) | -0.174 |
| (6) | 1.663 |
| (7) | 81.54 |
| (8) | -1.461 |
| (9) | 1.905 |
| (10) | 1.322 |
| (11) | 2.261 |
| (12) | 1.020 |
| (13) | 0.790 |
| (14) | 0.114 |

### Numerical Example 4

FIGS. 4 and 11A to 11D and TABLES 13 to 16 pertain to an image-forming lens 1000 according to Numerical Example 4 of the present disclosure. FIG. 4 is a diagram illustrating the lens configuration of the image-forming lens 1000 according to Numerical Example 4. FIG. 4 is a cross-sectional view of the image-forming lens 1000 according to Numerical Example 4. FIGS. 11A, 11B, 11C, and 11D are aberration curve diagrams of the image-forming lens 1000 according to Numerical Example 4. TABLE 13 presents surface data, TABLE 14 presents aspherical data, TABLE 15 presents focal length data, and TABLE 16 presents conditional expression data.

The configuration of the image-forming lens according to Numerical Example 4 is similar to that of the image-forming lens according to Numerical Example 1 except for the following points.
(1) In the second lens group G2, the biconvex positive lens 22A and the biconcave negative lens 23A are not cemented.
(2) The third lens group G3 consists of, sequentially from the object side, a biconvex positive lens 31B and a biconcave negative lens 32B. The surface on the object side of the biconvex positive lens 31B is aspherical.
(3) The fourth lens group G4 has negative refractive power, not positive refractive power. The fourth lens group G4 consists of a negative meniscus lens (i.e., the negative lens 41B) with a convex surface facing the image. Both surfaces of the negative meniscus lens (i.e., the negative lens 41B) are aspherical.

**[TABLE 13]**

| f=13.8 | F=3.57 | w=46.1 | Ya=14.127 | | |
|---|---|---|---|---|---|
| SURFACE NUMBER | R | D | Nd | vd | GLASS TYPE (GLASS MATERIAL) |
| 1 | 46.394 | 0.700 | 1.55200 | 70.70 | S-FPM5 |
| 2 | 7.464 | 3.620 | | | |
| 3* | -16.162 | 1.400 | 1.68948 | 31.02 | L-TIM28 |
| 4 | -23.763 | 0.200 | | | |
| 5 | 11.615 | 3.000 | 1.88300 | 40.76 | S-LAH58 |
| 6 | -38.619 | 0.270 | | | |
| 7 | -25.672 | 0.800 | 1.75211 | 25.05 | FF8 |
| 8 | 49.181 | 2.020 | | | |
| 9 | APERTURE STOP | 1.230 | | | |
| 10* | 9.380 | 2.710 | 1.85400 | 40.38 | L-LAH85V |
| 11 | -16.838 | 0.220 | | | |
| 12 | -16.157 | 0.600 | 1.80809 | 22.76 | S-NPH1W |
| 13 | 22.114 | 0.930 | | | |
| 14* | -11.234 | 1.310 | 1.86100 | 37.10 | L-LAH94 |
| 15* | -12.309 | 10.199 | | | |
| 16 | ∞ | 0.770 | 1.56200 | 61.80 | OPTICAL GLASS |
| 17 | ∞ | 1.300 | | | |
| 18 | ∞ | 0.700 | 1.50000 | 64.00 | OPTICAL GLASS |
| 19 | ∞ | BF | | | |

| | | | | | |
|---|---|---|---|---|---|
| * indicates rotationally symmetric aspheric surface | | | | | |

**[TABLE 14]**

| SURFACE NUMBER | K | A4 | A6 | A8 | A10 |
|---|---|---|---|---|---|
| 3 | 0.0211 | -3.17188E-06 | 5.49200E-07 | -4.66081E-09 | 0.00000E+00 |
| 10 | 0.0000 | 4.35798E-06 | 5.77432E-07 | 8.18865E-08 | 0.00000E+00 |
| 14 | -0.9122 | 8.15914E-04 | 2.90222E-05 | 9.46690E-08 | -6.52595E-08 |
| 15 | -1.0000 | 1.23007E-03 | 3.47952E-05 | 5.63714E-07 | -4.96153E-08 |

**[TABLE 15]**

| FOCAL LENGTH | |
|---|---|
| FIRST LENS GROUP | -16.22 |
| SECOND LENS GROUP | 21.05 |
| THIRD LENS GROUP | 15.70 |
| FOURTH LENS GROUP | -342.49 |
| FIRST TO SECOND LENS GROUPS | -546.23 |
| THIRD TO FOURTH LENS GROUPS | 17.14 |

**[TABLE 16]**

| CONDITIONAL EXPRESSION | |
|---|---|
| (1) | 1.471 |
| (2) | 0.776 |
| (3) | -1.167 |
| (4) | 1.597 |
| (5) | 0.047 |
| (6) | 5.243 |
| (7) | 70.70 |
| (8) | -1.171 |
| (9) | 1.905 |
| (10) | 1.373 |
| (11) | 2.360 |
| (12) | 1.020 |
| (13) | 0.844 |
| (14) | -0.031 |

### Numerical Example 5

FIGS. 5 and 12A to 12D and TABLES 17 to 20 pertain to an image-forming lens 1000 according to Numerical Example 5 of the present disclosure. FIG. 5 is a diagram illustrating the lens configuration of the image-forming lens 1000 according to Numerical Example 5. FIG. 5 is a cross-sectional view of the image-forming lens 1000 according to Numerical Example 5. FIGS. 12A, 12B, 12C, and 12D are aberration curve diagrams of the image-forming lens 1000 according to Numerical Example 5. TABLE 17 presents surface data, TABLE 18 presents aspherical data, TABLE 19 presents focal length data, and TABLE 20 presents conditional expression data.

The configuration of the image-forming lens according to Numerical Example 5 is similar to that of the image-forming lens according to Numerical Example 1 except for the following points.
(1) The third lens group G3 consists of, sequentially from the object side, a biconvex positive lens 31C, a biconcave negative lens 32C, and a positive meniscus lens (i.e., a positive lens 33C) with a convex surface facing the object. The biconvex positive lens 31C, the biconcave negative lens 32C, and the positive meniscus lens (i.e., the positive lens 33C) are cemented together.
(2) The fourth lens group G4 has negative refractive power, not positive refractive power. The fourth lens group G4 consists of, sequentially from the object side, a negative meniscus lens (i.e., a negative lens 41C) with a convex surface facing the image and a positive meniscus lens (i.e., a positive lens 42C) with a convex surface facing the image. The negative meniscus lens (i.e., the negative lens 41C) and the positive meniscus lens (i.e., the positive lens 42C) are cemented together. The surface on the object side of the negative meniscus lens (i.e., the negative lens 41C) is aspherical. The surface on the image side of the positive meniscus lens (i.e., the negative lens 42C) is aspherical.

**[TABLE 17]**

| f=13.2 | F=3.59 | w=47.4 | Ya=14.127 | | |
|---|---|---|---|---|---|
| SURFACE NUMBER | R | D | Nd | vd | GLASS TYPE (GLASS MATERIAL) |
| 1 | 18.208 | 0.700 | 1.61800 | 63.33 | S-PHM52 |
| 2 | 6.763 | 3.490 | | | |
| 3* | -24.804 | 0.700 | 1.73077 | 40.51 | L-LAM69 |
| 4 | -140.051 | 0.200 | | | |
| 5 | 11.774 | 2.700 | 1.95375 | 32.32 | S-LAH98 |
| 6 | -12.782 | 0.600 | 1.80809 | 22.76 | S-NPH1W |
| 7 | 46.545 | 1.600 | | | |
| 8 | APERTURE STOP | 1.500 | | | |
| 9 | 16.804 | 2.290 | 1.88300 | 40.76 | S-LAH58 |
| 10 | -8.635 | 0.600 | 1.67270 | 32.10 | S-TIM25 |
| 11 | 15.501 | 1.480 | 1.83481 | 42.72 | S-LAH55V |
| 12 | 38.420 | 1.480 | | | |
| 13* | -8.063 | 0.660 | 1.82115 | 24.06 | M-FDS910 |
| 14 | -25.782 | 1.790 | 1.85400 | 40.38 | L-LAH85V |
| 15* | -9.494 | 8.147 | | | |
| 16 | ∞ | 0.770 | 1.56200 | 61.80 | OPTICAL GLASS |
| 17 | ∞ | 1.300 | | | |
| 18 | ∞ | 0.700 | 1.50000 | 64.00 | OPTICAL GLASS |
| 19 | ∞ | BF | | | |

| | | | | | |
|---|---|---|---|---|---|
| * indicates rotationally symmetric aspheric surface | | | | | |

**[TABLE 18]**

| SURFACE NUMBER | K | A4 | A6 | A8 | A10 |
|---|---|---|---|---|---|
| 3 | -0.6161 | -1.00752E-04 | -2.20895E-07 | -2.17899E-08 | 0.00000E+00 |
| 13 | 0.1353 | 8.81120E-05 | 2.04243E-05 | 2.54209E-07 | -2.20893E-08 |
| 15 | -0.6635 | 2.68420E-04 | 1.25860E-05 | 1.90624E-07 | -6.94792E-09 |

**[TABLE 19]**

| FOCAL LENGTH | |
|---|---|
| FIRST LENS GROUP | -17.83 |
| SECOND LENS GROUP | 18.87 |
| THIRD LENS GROUP | 15.02 |
| FOURTH LENS GROUP | -1073.26 |
| FIRST TO SECOND LENS GROUPS | 118.88 |
| THIRD TO FOURTH LENS GROUPS | 17.25 |

**[TABLE 20]**

| CONDITIONAL EXPRESSION | |
|---|---|
| (1) | 2.130 |
| (2) | 0.827 |
| (3) | -1.879 |
| (4) | 2.910 |
| (5) | 0.017 |
| (6) | 2.770 |
| (7) | 63.33 |
| (8) | -1.350 |
| (9) | 1.905 |
| (10) | 1.499 |
| (11) | 2.379 |
| (12) | 1.070 |
| (13) | 0.821 |
| (14) | 0.145 |

### Numerical Example 6

FIGS. 6 and 13A to 13D and TABLES 21 to 24 pertain to an image-forming lens 1000 according to Numerical Example 6 of the present disclosure. FIG. 6 is a diagram illustrating the lens configuration of the image-forming lens 1000 according to Numerical Example 6. FIG. 6 is a cross-sectional view of the image-forming lens 1000 according to Numerical Example 6. FIGS. 13A, 13B, 13C, and 13D are aberration curve diagrams of the image-forming lens 1000 according to Numerical Example 6. TABLE 21 presents surface data, TABLE 22 presents aspherical data, TABLE 23 presents focal length data, and TABLE 24 presents conditional expression data.

The configuration of the image-forming lens according to Numerical Example 6 is similar to that of the image-forming lens according to Numerical Example 1 except for the following points.
(1) The second lens group G2 consists of, sequentially from the object side, a biconcave negative lens 21B, a negative meniscus lens (i.e., a negative lens 22B) with a convex surface facing the object, and a positive meniscus lens (i.e., a positive lens 23B) with a convex surface facing the object. The surface on the object side of the biconcave negative lens 21B is aspherical. The negative meniscus lens (i.e., the negative lens 22B) and the positive meniscus lens (i.e., the positive lens 23B) are cemented together.
(2) In the third lens group G3, the positive lens 32A is not a positive meniscus lens but a biconvex positive lens.
(3) The fourth lens group G4 has negative refractive power, not positive refractive power. The fourth lens group G4 consists of a negative meniscus lens (i.e., the negative lens 41B) with a convex surface facing the image. Both surfaces of the negative meniscus lens (i.e., the negative lens 41B) are aspherical.

**[TABLE 21]**

| | | | | | |
|---|---|---|---|---|---|
| f=13.8 | F=3.59 | w=46.0 | Ya=14.127 | | |

| SURFACE NUMBER | R | D | Nd | vd | GLASS TYPE (GLASS MATERIAL) |
|---|---|---|---|---|---|
| 1 | 22.577 | 0.700 | 1.59522 | 67.73 | S-FPM2 |
| 2 | 6.667 | 3.640 | | | |
| 3* | -67.300 | 0.700 | 1.68948 | 31.02 | L-TIM28 |
| 4 | 122.059 | 0.200 | | | |
| 5 | 10.267 | 1.000 | 1.68430 | 26.81 | FD270 |
| 6 | 7.226 | 1.940 | 1.78800 | 47.37 | S-LAH64 |
| 7 | 35.486 | 1.620 | | | |
| 8 | APERTURE STOP | 1.210 | | | |
| 9 | 18.022 | 1.670 | 1.95375 | 32.32 | S-LAH98 |
| 10 | -32.451 | 0.200 | | | |
| 11 | 45.611 | 2.110 | 1.88300 | 40.76 | S-LAH58 |
| 12 | -9.328 | 0.600 | 1.77830 | 23.91 | S-NPH7 |
| 13 | 16.537 | 1.740 | | | |
| 14* | -7.036 | 1.220 | 1.86100 | 37.10 | L-LAH94 |
| 15* | -7.923 | 9.244 | | | |
| 16 | ∞ | 0.770 | 1.56200 | 61.80 | OPTICAL GLASS |
| 17 | ∞ | 1.300 | | | |
| 18 | ∞ | 0.700 | 1.50000 | 64.00 | OPTICAL GLASS |
| 19 | ∞ | BF | | | |

| | | | | | |
|---|---|---|---|---|---|
| * indicates rotationally symmetric aspheric surface | | | | | |

**[TABLE 22]**

| SURFACE NUMBER | K | A4 | A6 | A8 | A10 |
|---|---|---|---|---|---|
| 3 | 0.3008 | -1.15015E-04 | -1.83576E-07 | -3.20340E-08 | 0.00000E+00 |
| 14 | -0.7374 | -3.91272E-05 | 1.33662E-05 | 1.75627E-06 | -7.52673E-08 |
| 15 | -0.6037 | 4.07738E-04 | 1.78386E-05 | 9.62561E-07 | -3.15711E-08 |

**[TABLE 23]**

| FOCAL LENGTH | |
|---|---|
| FIRST LENS GROUP | -16.16 |
| SECOND LENS GROUP | 22.16 |
| THIRD LENS GROUP | 14.04 |
| FOURTH LENS GROUP | -200.72 |
| FIRST TO SECOND LENS GROUPS | -149.10 |
| THIRD TO FOURTH LENS GROUPS | 15.92 |

**[TABLE 24]**

| CONDITIONAL EXPRESSION | |
|---|---|
| (1) | 3.064 |
| (2) | 0.783 |
| (3) | -4.861 |
| (4) | 1.194 |
| (5) | 0.081 |
| (6) | 1.969 |
| (7) | 67.73 |
| (8) | -1.167 |
| (9) | 1.905 |
| (10) | 1.340 |
| (11) | 2.258 |
| (12) | 1.020 |
| (13) | 0.818 |
| (14) | -0.107 |

### Numerical Example 7

FIGS. 7 and 14A to 14D and TABLES 25 to 28 pertain to an image-forming lens 1000 according to Numerical Example 7 of the present disclosure. FIG. 7 is a diagram illustrating the lens configuration of the image-forming lens 1000 according to Numerical Example 7. FIG. 7 is a cross-sectional view of the image-forming lens 1000 according to Numerical Example 7. FIGS. 14A, 14B, 14C, and 14D are aberration curve diagrams of the image-forming lens 1000 according to Numerical Example 7. TABLE 25 presents surface data, TABLE 26 presents aspherical data, TABLE 27 presents focal length data, and TABLE 28 presents conditional expression data.

The configuration of the image-forming lens according to Numerical Example 7 is similar to that of the image-forming lens according to Numerical Example 1 except for the following points.
(1) The third lens group G3 consists of, sequentially from the object side, a biconvex positive lens 31B and a biconcave negative lens 32B. The biconvex positive lens 31B and the biconcave negative lens 32B are cemented together.
(2) The fourth lens group G4 consists of, sequentially from the object side, a negative meniscus lens (i.e., a negative lens 41C) with a convex surface facing the image and a positive meniscus lens (i.e., a positive lens 42C) with a convex surface facing the image. The negative meniscus lens (i.e., the negative lens 41C) and the positive meniscus lens (i.e., the positive lens 42C) are cemented together. The surface on the object side of the negative meniscus lens (i.e., the negative lens 41C) is aspherical. The surface on the image side of the positive meniscus lens (i.e., the negative lens 42C) is aspherical.

**[TABLE 25]**

| f=13.3 | F=3.97 | w=47.1 | Ya=14.127 | | |
|---|---|---|---|---|---|
| SURFACE NUMBER | R | D | Nd | vd | GLASS TYPE (GLASS MATERIAL) |
| 1 | 18.771 | 0.700 | 1.52841 | 76.45 | S-FPM4 |
| 2 | 6.283 | 3.480 | | | |
| 3* | -21.906 | 0.700 | 1.68948 | 31.02 | L-TIM28 |
| 4 | -718.202 | 0.200 | | | |
| 5 | 11.979 | 2.740 | 1.90366 | 31.31 | TAFD25 |
| 6 | -8.702 | 0.600 | 1.75211 | 25.05 | FF8 |
| 7 | 44.189 | 1.390 | | | |
| 8 | APERTURE STOP | 1.240 | | | |
| 9 | 15.200 | 4.420 | 1.90043 | 37.37 | TAFD37A |
| 10 | -7.049 | 1.000 | 1.75211 | 25.05 | FF8 |
| 11 | 51.699 | 1.450 | | | |
| 12* | -7.857 | 0.700 | 1.82115 | 24.06 | M-FDS910 |
| 13 | -13.000 | 1.570 | 1.85400 | 40.38 | L-LAH85V |
| 14* | -8.776 | 8.709 | | | |
| 15 | ∞ | 0.770 | 1.56200 | 61.80 | OPTICAL GLASS |
| 16 | ∞ | 1.300 | | | |
| 17 | ∞ | 0.700 | 1.50000 | 64.00 | OPTICAL GLASS |
| 18 | ∞ | BF | | | |

| | | | | | |
|---|---|---|---|---|---|
| * indicates rotationally symmetric aspheric surface | | | | | |

**[TABLE 26]**

| SURFACE NUMBER | K | A4 | A6 | A8 | A10 |
|---|---|---|---|---|---|
| 3 | 0.1623 | -9.95233E-05 | -1.23326E-06 | -3.70434E-08 | 0.00000E+00 |
| 12 | 0.2844 | 5.26340E-05 | 2.22952E-05 | 8.76757E-07 | -3.72401E-08 |
| 14 | -0.1759 | 3.22735E-04 | 1.01687E-05 | 5.96690E-07 | -1.31466E-08 |

**[TABLE 27]**

| FOCAL LENGTH | |
|---|---|
| FIRST LENS GROUP | -18.23 |
| SECOND LENS GROUP | 21.22 |
| THIRD LENS GROUP | 15.27 |
| FOURTH LENS GROUP | 343.80 |
| FIRST TO SECOND LENS GROUPS | 338.02 |
| THIRD TO FOURTH LENS GROUPS | 16.72 |

**[TABLE 28]**

| CONDITIONAL EXPRESSION | |
|---|---|
| (1) | 2.049 |
| (2) | 0.811 |
| (3) | -1.647 |
| (4) | 3.888 |
| (5) | -0.053 |
| (6) | 2.907 |
| (7) | 76.45 |
| (8) | -1.371 |
| (9) | 1.905 |
| (10) | 1.518 |
| (11) | 2.434 |
| (12) | 1.062 |
| (13) | 0.787 |
| (14) | 0.049 |

FIGS. 15A and 15B are external views of a digital camera 100 according to an embodiment of the present disclosure, incorporating any one of the above-described image-forming lenses according to embodiments of the present disclosure. FIG. 16 is a block diagram of a hardware configuration of the digital camera 100. The digital camera 100 may include or be an interchangeable lens, an image-capturing apparatus, an information processing apparatus. When the digital camera 100 is an interchangeable lens, an image-capturing apparatus, or an information processing apparatus, the digital camera 100 can be read as an interchangeable lens, an image-capturing apparatus, and an information processing apparatus. In aspects of the interchangeable lens and the image-capturing apparatus, an image-forming lens according to an embodiment of the present disclosure is applicable as an image-capturing optical system. In an aspect of the information processing apparatus, an image-forming lens according to an embodiment of the present disclosure is applicable as an image-capturing optical system of a camera functional unit of a portable information terminal device.

The digital camera 100 includes a camera body 101 (or a casing), an image-capturing lens 102, a viewfinder 103, a flash 104, a shutter release button 105, a power button 106, a liquid crystal display (LCD) monitor 107, an operation button 108, a memory card slot 109, and a zoom switch 110.

The camera body 101 houses the components of the digital camera 100. The image-capturing lens 102 may be, for example, a unit incorporating the image-forming lens according to an embodiment of the present disclosure into a lens barrel, or may be detachably attachable to the camera body 101. In this case, the image-capturing lens 102 may be an interchangeable lens. The viewfinder 103 serves as a peephole for determining the subject and composition. The flash 104 emits a flash for nighttime or low-light shooting. The shutter release button 105 is a physical switch to execute shooting with the digital camera 100. The power button 106 is a physical switch to turn on and off the digital camera 100.

The LCD monitor 107 displays, for example, images captured by the digital camera 100. The operation button 108 is a physical switch to set, for example, the shooting mode of the digital camera 100. The memory card slot 109 is a slot into which a memory card that stores, for example, the data of images captured by the digital camera 100 is inserted. The zoom switch 110 is a physical switch used for zooming between the short focal length end and the long focal length end. However, the digital camera 100 does not use the zoom switch 110 when incorporating the image-forming lens (i.e., a single focus lens) according to an embodiment of the present disclosure.

The digital camera 100 further includes a central processing unit (CPU) 111, an image processor 112, a photodetector 113, a signal processor 114, a semiconductor memory 115, and a communication card 116, which are functional components within the camera body 101.

The CPU 111 performs various computational processes within the digital camera 100. The image processor 112 performs various image processing operations on images captured by the digital camera 100. The photodetector 113 captures external light used for photometric processing. The signal processor 114 performs processes of various signals, such as capture command signals and image processing signals. The semiconductor memory 115 serves as a temporary storage area for images captured by the digital camera 100. The communication card 116 is used to enable, for example, wireless communication with an external device.

The above-described configuration of the digital camera 100 is merely one example, and various design modifications are available. In other words, there is flexibility in specific embodiments of the digital camera 100.

The above-described embodiments are illustrative and do not limit the present invention. Thus, numerous additional modifications and variations are possible in light of the above teachings within the scope of the claims.

For example, elements and/or features of different illustrative embodiments may be combined with each other and/or substituted for each other within the scope of the claims.

This patent application is based on and claims priority to Japanese Patent Application No. 2022-177253, filed on November 4, 2022, in the Japan Patent Office.

### [Reference Signs List]

100 Digital camera (interchangeable lens, image-capturing apparatus, information processing apparatus)
G1 First lens group having negative refractive power 11A Negative lens
G2 Second lens group having positive refractive power
21A Negative lens
22A Positive lens
23A Negative lens
21B Negative lens
22B Negative lens
23B Positive lens
G3 Third lens group having positive refractive power
31A Positive lens
32A Positive lens
33A Negative lens
31B Positive lens
32B Negative lens
31C Positive lens
32C Negative lens
33C Positive lens
G4 Fourth lens group having positive or negative refractive power
41A Positive lens
41B Negative lens
41C Negative lens
42C Positive lens
F1, F2 Filter (cover glass)
I Image plane

## Claims

1. An image-forming lens consisting of, sequentially from an object side toward an image side: a first lens group (G1) having negative refractive power; a second lens group (G2) having positive refractive power; an aperture stop (S); a third lens group (G3) having positive refractive power; and a fourth lens group (G4),
wherein the fourth lens group (G4) has weakest refractive power among all of the first lens group (G1), the second lens group (G2), the third lens group (G3), and the fourth lens group (G4),
the first lens group (G1) consists of a negative lens (11A) with a concave surface facing an image,
the second lens group (G2) consists of, sequentially from the object side toward the image side: a negative lens (21A) with a concave surface facing an object; and a cemented lens (22A, 23A) having positive refractive power as a whole,
the third lens group (G3) includes: a cemented lens (32A, 33A) of a negative lens closest to the image and a positive lens that is second closest to the image in the third lens group (G3);
and a positive lens (31A) on the object side relative to the cemented lens (32A, 33A) of the third lens group (G3),
the fourth lens group (G4) consists of a single lens (41A; 41B) or a cemented lens (41C, 42C), in the fourth lens group (G4): a surface closest to the object is a concave surface facing the object, and a surface closest to the image is a convex surface facing the image, and
an air lens is disposed between a surface closest to the image in the second lens group (G2) and a surface closest to the object in the third lens group (G3), the air lens including the aperture stop (S) and having a meniscus shape with a convex surface facing the object.

2. The image-forming lens according to claim 1, wherein the image-forming lens satisfies a conditional expression (1) below: $0 < \left(r1s+r2s\right) / \left(r1s-r2s\right) < 10$ where r1s indicates a radius of curvature of a lens surface adjacent to an object side of the aperture stop, and r2s indicates a radius of curvature of a lens surface adjacent to an image side of the aperture stop.

3. The image-forming lens according to claim 1, wherein the image-forming lens satisfies a conditional expression (2) below: $0.5 < L 1 h / Sh < 1.1$ where L1h indicates a height from an optical axis of an axial marginal ray on a surface on the object side of a lens closest to the object in an optical system of the image-forming lens, and Sh indicates a height from the optical axis of the axial marginal ray on the aperture stop.

4. The image-forming lens according to claim 1, wherein the image-forming lens satisfies a conditional expression (3) below: $- 6 < r 2 F / f < - 0.5$ where r2F indicates a radius of curvature of a surface closest to the object in the second lens group, and f indicates a focal length of a lens system as a whole of the image-forming lens when the image-forming lens is focused on an object at infinity.

5. The image-forming lens according to claim 1, wherein the image-forming lens satisfies a conditional expression (4) below: $0.5 < r 3 R / f < 10$ where r3R indicates a radius of curvature of a surface closest to the image in the third lens group, and f indicates a focal length of a lens system as a whole of the image-forming lens when the image-forming lens is focused on an object at infinity.

6. The image-forming lens according to claim 1, wherein the image-forming lens satisfies a conditional expression (5) below: $- 0.4 < f 1 / f 4 < 0.4$ where f1 indicates a focal length of the first lens group, and f4 indicates a focal length of the fourth lens group.

7. An interchangeable lens comprising the image-forming lens according to any one of claims 1 to 6.

8. An image-capturing apparatus comprising the image-forming lens according to any one of claims 1 to 6.

9. An information processing apparatus comprising the image-forming lens according to any one of claims 1 to 6.

## Patentansprüche

1. Bilderzeugende Linse, bestehend aus den folgenden Elementen, sequenziell von der Objektseite zur Bildseite hin: einer ersten Linsengruppe (G1) mit negativer Brechkraft; einer zweiten Linsengruppe (G2) mit positiver Brechkraft; einer Blendenöffnung (S); einer dritten Linsengruppe (G3) mit positiver Brechkraft; und einer vierten Linsengruppe (G4),
wobei die vierte Linsengruppe (G4) die geringste Brechkraft unter allen der ersten Linsengruppe (G1), der zweiten Linsengruppe (G2), der dritten Linsengruppe (G3) und der vierten Linsengruppe (G4) aufweist,
die erste Linsengruppe (G1) aus einer Negativlinse (11A) besteht, deren konkave Oberfläche einem Bild zugewandt ist,
die zweite Linsengruppe (G2) aus den folgenden Elementen besteht, sequenziell von der Objektseite zur Bildseite hin: einer Negativlinse (21A), deren konkave Oberfläche einem Objekt zugewandt ist; und einer Kittlinse (22A, 23A) mit insgesamt positiver Brechkraft;
die dritte Linsengruppe (G3) Folgendes umfasst: eine Kittlinse (32A, 33A) aus einer dem Bild am nächsten gelegenen Negativlinse und einer Positivlinse, die in der dritten Linsengruppe (G3) an zweiter Stelle in Richtung zum Bild steht; sowie eine Positivlinse (31A) auf der Objektseite relativ zur Kittlinse (32A, 33A) der dritten Linsengruppe (G3),
die vierte Linsengruppe (G4) aus einer einzelnen Linse (41A; 41B) oder einer Kittlinse (41C, 42C) besteht,
in der vierten Linsengruppe (G4): eine dem Objekt am nächsten gelegene Oberfläche eine konkave, dem Objekt zugewandte Oberfläche ist und eine dem Bild am nächsten gelegene Oberfläche eine konvexe, dem Bild zugewandte Oberfläche ist, und eine Luftlinse zwischen einer dem Bild am nächsten gelegenen Oberfläche in der zweiten Linsengruppe (G2) und einer dem Objekt am nächsten gelegenen Fläche in der dritten Linsengruppe (G3) angeordnet ist, wobei die Luftlinse die Blendenöffnung (S) umfasst und eine Meniskusform mit einer dem Objekt zugewandten konvexen Oberfläche aufweist.

2. Bilderzeugende Linse nach Anspruch 1, wobei die bilderzeugende Linse den nachstehenden Bedingungsausdruck (1) erfüllt: $0 < \left(r1s+r2s\right) / \left(r1s-r2s\right) < 10$ wobei r1s den Krümmungsradius einer Linsenoberfläche bezeichnet, die an die Objektseite der Blendenöffnung angrenzt, und r2s den Krümmungsradius einer Linsenoberfläche bezeichnet, die an die Bildseite der Blendenöffnung angrenzt.

3. Bilderzeugende Linse nach Anspruch 1, wobei die bilderzeugende Linse den nachstehenden Bedingungsausdruck (2) erfüllt: $0 , 5 < L 1 h / Sh < 1 , 1$ wobei L1h die Höhe von der optischen Achse eines axialen Randstrahls auf einer Oberfläche auf der Objektsseite einer dem Objekt am nächsten gelegenen Linse in einem optischen System der bilderzeugenden Linse bezeichnet, und Sh die Höhe von der optischen Achse des axialen Randstrahls auf der Blendenöffnung bezeichnet.

4. Bilderzeugende Linse nach Anspruch 1, wobei die bilderzeugende Linse den nachstehenden Bedingungsausdruck (3) erfüllt: $- 6 < r 2 F / f < - 0 , 5$ wobei r2F den Krümmungsradius einer dem Objekt am nächsten gelegenen Oberfläche in der zweiten Linsengruppe bezeichnet, und f die Brennweite des gesamten Linsensystems der bilderzeugenden Linse bezeichnet, wenn die bilderzeugende Linse auf ein Objekt im Unendlichen fokussiert ist.

5. Bilderzeugende Linse nach Anspruch 1, wobei die bilderzeugende Linse den nachstehenden Bedingungsausdruck (4) erfüllt: $0 , 5 < r 3 R / f < 10$ wobei r3R den Krümmungsradius der dem Bild am nächsten gelegenen Oberfläche in der dritten Linsengruppe bezeichnet, und f die Brennweite des gesamten Linsensystems der bilderzeugenden Linse bezeichnet, wenn die bilderzeugende Linse auf ein Objekt im Unendlichen fokussiert ist.

6. Bilderzeugende Linse nach Anspruch 1, wobei die bilderzeugende Linse den nachstehenden Bedingungsausdruck (5) erfüllt: $- 0 , 4 < f 1 / f 4 < 0 , 4$ wobei f1 die Brennweite der ersten Linsengruppe bezeichnet, und f4 die Brennweite der vierten Linsengruppe bezeichnet.

7. Austauschbare Linse, die die bilderzeugende Linse mach einem der Ansprüche 1 bis 6 umfasst.

8. Bildaufnahmevorrichtung, die die bilderzeugende Linse nach einem der Ansprüche 1 bis 6 umfasst.

9. Informationsverarbeitungsvorrichtung, die die bilderzeugende Linse nach einem der Ansprüche 1 bis 6 umfasst.

## Revendications

1. Objectif de formation d'image comprenant, successivement depuis un côté objet vers un côté image : un premier groupe de lentilles (G1) présentant une puissance de réfraction négative, un deuxième groupe de lentilles (G2) présentant une puissance de réfraction positive, un diaphragme (S), un troisième groupe de lentilles (G3) présentant une puissance de réfraction positive, et un quatrième groupe de lentilles (G4),
le quatrième groupe de lentilles (G4) présentant la puissance de réfraction la plus basse parmi le premier groupe de lentilles (G1), le deuxième groupe de lentilles (G2), le troisième groupe de lentilles (G3) et le quatrième groupe de lentilles (G4),
le premier groupe de lentilles (G1) étant constitué d'une lentille négative (11A) dont la surface concave est tournée vers une image,
le deuxième groupe de lentilles (G2) étant constitué, successivement du côté objet vers le côté image : d'une lentille négative (21A) dont la surface concave est tournée vers un objet, et d'une lentille collée (22A, 23A) présentant une puissance de réfraction positive dans son ensemble,
le troisième groupe de lentilles (G3) comprenant : une lentille collée (32A, 33A) constituée d'une lentille négative la plus proche de l'image et d'une lentille positive qui est la deuxième plus proche de l'image au sein du troisième groupe de lentilles (G3), ainsi qu'une lentille positive (31A) située côté objet par rapport à la lentille collée (32A, 33A) du troisième groupe de lentilles (G3),
le quatrième groupe de lentilles (G4) étant constitué d'une lentille simple (41A ; 41B) ou d'une lentille collée (41C, 42C) ; dans le quatrième groupe de lentilles (G4) : une surface la plus proche de l'objet est une surface concave tournée vers l'objet, une surface la plus proche de l'image est une surface convexe tournée vers l'image, et une lentille d'air est disposée entre une surface la plus proche de l'image au sein du deuxième groupe de lentilles (G2) et une surface la plus proche de l'objet au sein du troisième groupe de lentilles (G3), la lentille d'air comprenant le diaphragme (S) et présentant une forme de ménisque dotée d'une surface convexe tournée vers l'objet.

2. Objectif de formation d'image selon la revendication 1, l'objectif de formation d'image satisfaisant l'expression conditionnelle (1) ci-dessous : $0 < \left(r1s+r2s\right) / \left(r1s-r2s\right) < 10$ où r1s désigne le rayon de courbure d'une surface de lentille adjacente au côté objet du diaphragme, et r2s désigne le rayon de courbure d'une surface de lentille adjacente au côté image du diaphragme.

3. Objectif de formation d'image selon la revendication 1, l'objectif de formation d'image satisfaisant l'expression conditionnelle (2) ci-dessous : $0 , 5 < L 1 h / Sh < 1 , 1$ où L1h désigne la hauteur à partir de l'axe optique d'un rayon marginal axial sur une surface du côté objet d'une lentille la plus proche de l'objet dans un système optique de l'objectif de formation d'image, et Sh désigne la hauteur à partir de l'axe optique du rayon marginal axial sur le diaphragme.

4. Objectif de formation d'image selon la revendication 1, l'objectif de formation d'image satisfaisant l'expression conditionnelle (3) ci-dessous : $- 6 < r 2 F / f < 0 , 5$ où r2F désigne le rayon de courbure d'une surface la plus proche de l'objet au sein du deuxième groupe de lentilles, et f désigne la distance focale de l'ensemble du système de lentilles de l'objectif de formation d'image lorsque ce dernier est focalisé sur un objet situé à l'infini.

5. Objectif de formation d'image selon la revendication 1, l'objectif de formation d'image satisfaisant l'expression conditionnelle (4) ci-dessous : $0 , 5 < r 3 R / f < 10$ où r3R désigne le rayon de courbure d'une surface la plus proche de l'image au sein du troisième groupe de lentilles, et f désigne la distance focale de l'ensemble du système de lentilles de l'objectif de formation d'image lorsque ce dernier est focalisé sur un objet situé à l'infini.

6. Objectif de formation d'image selon la revendication 1, l'objectif de formation d'image satisfaisant l'expression conditionnelle (5) ci-dessous : $- 0 , 4 < f 1 / f 4 < 0 , 4$ où f1 désigne la distance focale du premier groupe de lentilles et f4 désigne la distance focale du quatrième groupe de lentilles.

7. Objectif interchangeable comprenant l'objectif de formation d'image selon l'une quelconque des revendications 1 à 6.

8. Appareil de capture d'image comprenant l'objectif de formation d'image selon l'une quelconque des revendications 1 à 6.

9. Appareil de traitement d'informations comprenant l'objectif de formation d'image selon l'une quelconque des revendications 1 à 6.
